# EUROPÄISCHE PATENTSCHRIFT

(11) **EP 3 778 204 B1**
(45) Veröffentlichungstag und Bekanntmachung des Hinweises auf die Patenterteilung: **29.12.2021**
(21) Anmeldenummer: 20198275.8
(22) Anmeldetag: 14.02.2019
(51) Int. Cl.: B29D 11/00, B24B 13/06, G02C 7/02, G09F 3/10, G09F 3/00, B24B 13/005

(54) **VERFAHREN ZUM HERSTELLEN EINES BRILLENGLAS-HALBFABRIKATS UND BRILLENGLAS-HALBFABRIKAT**
SEMIFINISHED SPECTACLE LENS AND METHOD FOR PRODUCING A SEMIFINISHED SPECTACLE LENS
PROCÉDÉ DE FABRICATION D'UN DEMI-PRODUIT POUR VERRE DE LUNETTES ET DEMI-PRODUIT POUR VERRE DE LUNETTES

(30) Priorität: 14.02.2018 EP 18156641
(43) Veröffentlichungstag der Anmeldung: 17.02.2021
(62) Teilanmeldung aus: 19703763.3
(73) Patentinhaber: Carl Zeiss Vision International GmbH, 73430 Aalen (DE)
(72) Erfinder: Meschenmoser, Ralf, 73457 Essingen (DE); Klora, Dennis, 70193 Stuttgart (DE); Ellenrieder, Marc, 73431 Aalen (DE)
(74) Vertreter: Witte, Weller & Partner Patentanwälte mbB

(56) Entgegenhaltungen:
- EP-A2- 0 318 164
- WO-A1-2007/001251
- US-A1- 2008 286 458
- US-A1- 2011 101 552
- US-A1- 2012 314 186
- US-A1- 2013 075 465

## Beschreibung

Die vorliegende Erfindung betrifft ein Verfahren zum Herstellen eines Brillenglas-Halbfabrikats, insbesondere zur Kennzeichnung und Verfolgung eines Brillenglas-Halbfabrikats in der Fertigung. Die Erfindung betrifft ferner die Verwendung eines Aufklebers zur Kennzeichnung eines Brillenglas-Halbfabrikats in der Fertigung, ein Brillenglas-Halbfabrikat sowie eine Vorrichtung zum Prozessieren eines Brillenglas-Halbfabrikats.

Aus der WO 2013/092987 A1 ist ein Verfahren zum Abspeichern von Informationen auf einem Brillenglas bzw. Brillenglas-Halbfabrikat bekannt, bei welchem eine Markierung dauerhaft auf oder in dem das Brillenglas bzw. Brillenglas-Halbfabrikat ausbildenden Glas- oder Kunststoffkörper erzeugt wird. Die Markierung wird mit einem Markierungssystem dauerhaft auf oder in dem Glas- oder Kunststoffkörper an einem Definitionspunkt eines durch zwei Punkte auf oder in dem Glas- oder Kunststoffkörper festgelegten lokalen körpereigenen Glas- oder Kunststoffkörper-Koordinatensystems erzeugt. In diesem lokalen Glas- oder Kunststoffkörper-Koordinatensystem gibt der Hersteller die Lage der Glashorizontalen und/oder des Fern- und/oder des Nah- und/oder des Prismenbezugspunkts an. Somit ist nach der Oberflächenbearbeitung eine Referenz gegeben.

EP 2 541 490 A1 befasst sich mit der Authentifizierung von Linsen und offenbart ferner ein Linsenverarbeitungsmanagementsystem bei welchem ein Authentifizierungsabschnitt für Linsen vorgesehen ist, um eine nicht autorisierte Nutzung eines Linsendesigns zu verhindern. Aus der US 2013/0075465 A1 ist ein Verfahren bekannt, bei welchem zunächst ein Aktivierungscode erfasst wird und erst nach Erfassung eines zulässigen Aktivierungscodes nachfolgende Schritte ausgeführt werden. Somit kann eine nicht autorisierte Herstellung verhindert werden.

Die Druckschrift US 2012/0314186 A1 beschreibt ein Verfahren zur Randbearbeitung eines Brillenglases. Beim Hersteller wird ein ungerandetes Brillenglas hergestellt und mit einer Speichermarkierung versehen. Die in der Speichermarkierung gespeicherte Information wird beim Optiker ausgelesen und basierend auf der gespeicherten Information die Randbearbeitung des Brillenglases vorgenommen.

Es sind verschiedene Verfahren zur Massenproduktion von Brillengläsern, Brillenglas-Halbfabrikaten oder sogenannten Pucks, Halbfabrikaten oder Blanks bekannt. Zwei gebräuchliche Herstellungsverfahren sind Formgießen (casting) und Spritzgießen (injection molding).

Beim "Formgießen" kommt in der Brillenoptik üblicherweise der Duroplast Allyldiglycolcarbonat (z.B. CR39) zum Einsatz. Das Monomer liegt typischerweise in Form einer niedrigviskosen Flüssigkeit vor. Um zu einem räumlich vernetzten Festkörper zu gelangen, wird ein Peroxid-Katalysator zugeführt. Der Gießansatz wird dann in eine Werkzeugform bzw. Gussform mit z.B. zwei (Glas-)Formschalen gefüllt. Zwischen diesen Formschalen befindet sich ein elastischer Distanzring. Die Polymerisation erfolgt beispielsweise im Kühl-/Wärmeschrank oder im Wasserbad bei Temperaturen zwischen 50 und 100 °C. Da der Temperaturanstieg sehr langsam und gleichmäßig erfolgen soll, kann sich der Polymerisationsvorgang in Abhängigkeit von der Dicke und der Geometrie des Gießlings mehrere Stunden bis Tage hinziehen. Die hervorragende mechanische Belastbarkeit dieses Kunststoffs erlaubt nicht nur das Gießen von Fertigfabrikanten, sondern auch von Halbfabrikaten, beispielsweise mit einer ersten bereits ausgeformten Fläche (z.B. Vorderfläche) deren zweite Fläche (Rezeptfläche; z.B. Rückfläche) durch Fräsen schleifen und polieren nach Wunsch gefertigt werden kann.

"Spritzgießen" ist ein rationelles Verfahren zur Herstellung von Kunststoff-Brillengläsern bzw. Brillenglas-Halbfabrikaten in großen Stückzahlen. Im Gegensatz zum Formgießen liegt beim Spritzgießen der Kunststoff (das Polymer), schon in Granulatform vor. Beispielhafte Kunststoffmaterialien sind Thermoplaste wie PMMA (Polymethylmethacrylat), PC (Polycarbonat) und PS (Polystyrol). Im Spritzzylinder wird das Granulat aufgeschmolzen, in eine homogene Schmelze überführt und mit hohem Druck in die entsprechende Werkzeugform eingespritzt. Nach einer kurzen Abkühlphase haben die so geformten Brillengläser eine ausreichende Formstabilität erreicht und können aus der Werkzeugform entnommen werden.

In beiden Fällen kann mittels der Werkzeugform - neben der gewünschten Form - ein Code bzw. eine Kennzeichnung in das Brillenglas-Halbfabrikat eingeprägt werden. Ein in der Werkzeugform eingeprägter Code wird also beim Gießen auf jedes mit dieser Werkzeugform hergestellte Brillenglas-Halbfabrikat übertragen bzw. abgeformt. Eine eindeutige Identifikation eines einzelnen Brillenglas-Halbfabrikats ist nicht möglich, sondern lediglich eine nachträgliche Zuordnung von Werkzeug und Brillenglas-Halbfabrikat. Alternativ kann ein Code mittels Laser-Gravur in das Brillenglas-Halbfabrikat eingeprägt werden.

In Anbetracht des Stands der Technik kann eine Aufgabe der vorliegenden Erfindung darin bestehen, ein verbessertes Verfahren zum Herstellen, insbesondere zur Kennzeichnung, eines Brillenglases bzw. Brillenglas-Halbfabrikats bereitzustellen. Insbesondere wäre es wünschenswert, eine Kennzeichnung von Brillenglas-Halbfabrikaten mit geringem Platzbedarf bei vorzugsweise guter Lesbarkeit der Kennzeichnung zu ermöglichen. Weiterhin wäre es wünschenswert, eine Individualisierung zu einem möglichst frühen Zeitpunkt im Fertigungsprozess zu ermöglichen.

Die beanspruchten Gegenstände sind in den unabhängigen Ansprüchen definiert. Vorteilhafte Ausführungsformen sind in den abhängigen Ansprüchen beschrieben.

Gemäß einem ersten Aspekt der vorliegenden Offenbarung wird daher vorgeschlagen, ein Verfahren zum Herstellen eines Brillenglas-Halbfabrikats bereitzustellen, gekennzeichnet durch den Schritt Kennzeichnen des Brillenglas-Halbfabrikats durch Aufbringen eines (lösbaren) Aufklebers auf dem Brillenglas-Halbfabrikat, wobei der Aufkleber einen Code zur eindeutigen Identifikation des Brillenglas-Halbfabrikats aufweist. Das Brillenglas-Halbfabrikat kann ferner einen in das Brillenglas-Halbfabrikat eingeprägten zweiten Code aufweisen, wobei der Aufkleber derart auf dem Brillenglas-Halbfabrikat aufgebracht wird, dass der Aufkleber den in das Brillenglas-Halbfabrikat eingeprägten zweiten Code zumindest teilweise überdeckt.

Die Erfinder haben erkannt, dass bei den im Stand der Technik eingesetzten Verfahren zur Kennzeichnung in der Fertigung weiterhin das Problem besteht, dass ein nicht unwesentlicher Teil der Linsenoberfläche durch den Code beansprucht wird. Dies gilt insbesondere, wenn eine Vielzahl an Parametern, wie beispielsweise die geometrischen Eigenschaften der Werkzeugform und damit des Brillenglas-Halbfabrikats codiert sein sollen. Darüber hinaus können herkömmliche Codes nicht ohne weiteres entfernt werden, da die Codes in das Linsenmaterial eingeprägt sind, und somit eine mechanische Oberflächennachbehandlung erforderlich machen, selbst wenn zur Herstellung der endgültigen Form des Brillenglases an der Stelle des Codes kein Materialabtrag erforderlich wäre.

Ein Brillenglas-Halbfabrikat durchläuft bis zum fertigen Brillenglas noch einen oder mehrere Fertigungsschritte. Entgegen dem herkömmlichen Ansatz, wobei ein Code unmittelbar in das Brillenglasmaterial eingeprägt wird, um weitere Fertigungsschritte durchlaufen zu können, haben die Erfinder erkannt, dass stattdessen überraschenderweise ein Aufkleber bzw. Sticker in der Fertigung auf das Brillenglas-Halbfabrikat aufgebracht werden kann. Überraschenderweise ist eine solche Kennzeichnung bereits zu einem frühen Zeitpunkt in der Fertigung möglich, insbesondere unmittelbar nach dem Lösen aus der Werkzeugform zum Spritzgießen oder Formgießen. Der Aufkleber weist einen Code zur eindeutigen Identifikation des Brillenglas-Halbfabrikats auf. Somit erfolgt keine Beschädigung der Oberfläche. Nach Entfernen des Aufklebers kann der entsprechende Bereich seine gewünschte optische und kosmetische Wirkung entfalten.

Indem der Aufkleber einen Code zur eindeutigen Identifikation des Brillenglas-Halbfabrikats aufweist, ist nicht nur eine nachträgliche Zuordnung von Werkzeug und Brillenglas-Halbfabrikat möglich, sondern kann ein individuelles Linsenelement nachverfolgt werden. Wenn beispielsweise eine Vielzahl von Brillenglas-Halbfabrikaten hergestellt werden und nach etwa der Hälfte der zu prozessierenden Elemente ein Problem auftritt oder ein Fertigungsparameter "wegdriftet", so war es bei herkömmlicher Kennzeichnung mittels eines in der Werkzeugform eingeprägten Codes zur Sicherheit bzw. um dem gewünschten hohen Qualitätsanspruch zu genügen, erforderlich das gesamte Los auszusondern und nicht weiter zu verwenden. Indem die Brillenglas-Halbfabrikate individuell gekennzeichnet sind, kann jedoch festgestellt werden, ab wann ein Problem aufgetreten ist, sodass nicht betroffene Elemente weiterhin verwendet werden können. Ferner kann bei wegdriftenden Parametern gezielt gegengesteuert werden, indem in nachfolgenden Fertigungsschritten ein individueller Korrekturwert für betroffene Elemente berücksichtigt werden kann. Insbesondere ermöglicht die eindeutige Kennzeichnung eines Brillenglas-Halbfabrikats mittels eines Aufklebers den Einsatz von sogenannten Big Data Analysen in der Massenproduktion von Brillengläsern. Eine Kennzeichnung zu einem frühen Zeitpunkt in der Fertigung ermöglicht ferner eine Verknüpfung mit einem Fertigungszeitpunkt beispielsweise in Form eines Zeitstempels bzw. eines virtuellen Zeitstempels, welcher mit dem eindeutigen Code verknüpft sein kann.

Gemäß einem zweiten Aspekt der vorliegenden Offenbarung wird ein Brillenglas-Halbfabrikat mit einem (lösbaren) Aufkleber vorgeschlagen, wobei der Aufkleber einen Code zur eindeutigen Identifikation des Brillenglas-Halbfabrikats aufweist. Das Brillenglas-Halbfabrikat kann ferner einen in das Brillenglas-Halbfabrikat eingeprägten zweiten Code aufweisen, wobei der Aufkleber derart auf dem Brillenglas-Halbfabrikat aufgebracht ist, dass der Aufkleber den in das Brillenglas-Halbfabrikat eingeprägten zweiten Code zumindest teilweise überdeckt.

Gemäß einem dritten Aspekt der vorliegenden Offenbarung wird die Verwendung eines (lösbaren) Aufklebers zur Kennzeichnung eines Brillenglas-Halbfabrikats bzw. zur Verfolgung eines Brillenglas-Halbfabrikats in der Fertigung vorgeschlagen, wobei die Verwendung vorzugsweise ein Aufbringen des Aufklebers auf dem Brillenglas-Halbfabrikat umfasst, und wobei der Aufkleber einen Code zur eindeutigen Identifikation des Brillenglas-Halbfabrikats aufweist. Das Brillenglas-Halbfabrikat kann ferner einen in das Brillenglas-Halbfabrikat eingeprägten zweiten Code aufweisen, wobei der Aufkleber derart auf dem Brillenglas-Halbfabrikat aufgebracht wird, dass der Aufkleber den in das Brillenglas-Halbfabrikat eingeprägten zweiten Code zumindest teilweise überdeckt.

Gemäß einem vierten Aspekt der vorliegenden Offenbarung wird eine Vorrichtung zum Prozessieren eines Brillenglas-Halbfabrikats vorgeschlagen mit einer Aufnahme für ein Brillenglas-Halbfabrikat; und einer Vorrichtung zum Aufbringen eines (lösbaren) Aufklebers auf das Brillenglas-Halbfabrikat, wobei der Aufkleber einen Code zur eindeutigen Identifikation des Brillenglas-Halbfabrikats aufweist. Vorzugsweise weist die Vorrichtung ferner eine Leseeinrichtung zum Lesen des Codes und eine DatenSchnittstelle auf, wobei dir Vorrichtung dazu ausgebildet ist, den Code in einer Datenbank zu registrieren.

Gemäß einem weiteren Aspekt der vorliegenden Offenbarung wird ein Verfahren zum Prozessieren eines Brillenglas-Halbfabrikats vorgeschlagen, wobei das Verfahren die folgenden Schritte aufweist:
- Bereitstellen eines Brillenglas-Halbfabrikats;
- Aufbringen eines Aufklebers auf das Brillenglas-Halbfabrikat, wobei der Aufkleber vorzugsweise einen Code zur eindeutigen Identifikation des Brillenglas-Halbfabrikats aufweist;
- Auslesen des Codes in einem nachgelagerten Fertigungsschritt; und
- Prozessieren des Brillenglas-Halbfabrikats basierend auf dem ausgelesenen Code des Aufklebers.

Gemäß einem weiteren Aspekt der vorliegenden Offenbarung wird ein Verfahren zum Herstellen, insbesondere zur Kennzeichnung eines Brillenglas-Halbfabrikats vorgeschlagen, wobei das Verfahren die folgenden Schritte aufweist:
- Bereitstellen eines Brillenglas-Halbfabrikats;
- Auslesen eines Codes von zumindest einer Werkzeugform mit welcher zumindest eine Oberfläche des Brillenglas-Halbfabrikats geformt wurde;
- Aufbringen eines Aufklebers auf das Brillenglas-Halbfabrikat, wobei der Aufkleber vorzugsweise einen Code zur eindeutigen Identifikation des Brillenglas-Halbfabrikats aufweist;
- Zuordnen des Codes der Werkzeugform und des Codes des Aufklebers. Es versteht sich, dass diese Schritte vorteilhaft mit den Schritten des Verfahrens gemäß dem ersten Aspekt kombiniert werden können.

Mit anderen Worten kann somit eine Verbindung zwischen dem eindeutigen Code des Aufklebers und dem Code der Werkzeugform hergestellt werden. Vorzugsweise werden ein erster Code einer ersten Werkzeugform, z.B. zum Formen einer Vorderfläche des Brillenglas-Halbfabrikats und/oder ein zweiter Code einer zweiten Werkzeugform, z.B. zum Formen einer Rückfläche des Brillenglas-Halbfabrikats, ausgelesen und die Zuordnung zum Code des Aufklebers hergestellt. Somit ist es in nachfolgenden Fertigungsschritten nicht mehr erforderlich, ein oder zwei separate Codes auszulesen. Stattdessen kann der Code des Aufklebers ausgelesen werden und, dank der Zuordnung zu den Codes der Werkzeugform(en), Information über eine oder mehrere Flächen des Brillenglas-Halbfabrikats gewonnen werden.

Gemäß einem weiteren Aspekt der vorliegenden Offenbarung wird ein Verfahren zum Herstellen eines Brillenglas-Halbfabrikats bereitgestellt mit dem Schritt: Kennzeichnen des Brillenglas-Halbfabrikats durch Aufbringen eines (lösbaren) Aufklebers auf dem Brillenglas-Halbfabrikat, wobei der Aufkleber einen Code zur eindeutigen Identifikation des Brillenglas-Halbfabrikats aufweist; und wobei der Aufkleber als Referenz für zumindest einen Kontrollbereich oder ein Koordinatensystem des Brillenglas-Halbfabrikats, insbesondere eine Referenz für ein Koordinatensystem mit vier Quartilen, verwendet wird. Das Brillenglas-Halbfabrikat kann einen in das Brillenglas-Halbfabrikat eingeprägten zweiten Code aufweisen. Das Verfahren kann ferner die folgenden Schritte aufweisen:
- Auslesen des Codes (11) des Aufklebers (10) von einer ersten Seite des Brillenglas-Halbfabrikats (1); und
- Auslesen des eingeprägten zweiten Codes (25, 26) von einer zweiten Seite des Brillenglas-Halbfabrikats (1).

Gemäß einem weiteren Aspekt der vorliegenden Offenbarung wird ein Verfahren zum Herstellen eines Brillenglas-Halbfabrikats bereitgestellt mit dem Schritt: Kennzeichnen des Brillenglas-Halbfabrikats durch Aufbringen eines (lösbaren) Aufklebers auf dem Brillenglas-Halbfabrikat, wobei der Aufkleber einen Code zur eindeutigen Identifikation des Brillenglas-Halbfabrikats aufweist. Der Aufkleber kann als Referenz für zumindest einen Kontrollbereich oder ein Koordinatensystem des Brillenglas-Halbfabrikats, insbesondere als Referenz für ein Koordinatensystem mit vier Quartilen, verwendet werden; wobei der Aufkleber mit einer Positioniergenauigkeit aus einer Gruppe von ±1 mm, ±500 µm, ±200 µm, ±100 µm, ±50 µm, ±20 µm, ±1° und ±0.5 °Winkelgenauigkeit bezogen auf ein Zentrum des Brillenglas-Halbfabrikats, auf dem Brillenglas-Halbfabrikat aufgebracht sein kann.

Ein Vorteil dieser Ausgestaltung kann darin bestehen, dass eine Ausrichtung oder Bestimmung von zu bearbeitenden Flächen während des Fertigungsverfahrens auf einfachere Art und Weise erfolgen kann. Der Aufkleber kann flexibel auf einer noch nicht fertig prozessierten Oberfläche oder auch auf einer bereits fertig prozessierten Oberfläche des Brillenglas-Halbfabrikats aufgebracht sein und dort als Referenz dienen. Der Aufkleber kann eine Referenz bilden, ohne dass die gegebenenfalls bereits fertige Oberfläche beschädigt wird. Optional kann eine in das Brillenglashalbfabrikat eingeprägte Markierung zumindest teilweise überklebt werden. Der Aufkleber kann als neue Kennzeichnung bzw. als neue Referenz zum Kennzeichnen von Kontrollbereichen bzw. als neue Referenz für ein Koordinatensystem, beispielsweise mit Quartilen wie z.B. Q1, Q2, Q3, Q4 verwendet werden. Hierdurch kann eine verbesserte Genauigkeit nachfolgender Fertigungsschritten erreicht werden. Ein weiterer Vorteil kann darin bestehen, dass günstigere Fertigungseinrichtungen eingesetzt werden können. Ein Aufkleber als Referenz bzw. mit einem Koordinatensystem kann leichter auszulesen sein, als eine in das Brillenglas-Halbfabrikat eingeprägte Referenz. Der Aufkleber kann eine in das Brillenglas-Halbfabrikat eingeprägte Referenz ersetzen oder ergänzen. Der Aufkleber kann derart auf dem Brillenglas-Halbfabrikat platziert sein bzw. werden, dass er als Referenz für nachfolgende Fertigungsschritte dienen kann. Insbesondere kann der Aufkleber mit einer Positioniergenauigkeit aus einer Gruppe von ±1 mm, ±500 µm, ±200 µm, ±100 µm, ±50 µm, ±20 µm auf dem Brillenglas-Halbfabrikat aufgebracht sein. Der Aufkleber kann mit einer Positioniergenauigkeit aus einer Gruppe von ±2°, ±1° und ±0.5 °Winkelgenauigkeit bezogen auf ein Zentrum des Brillenglas-Halbfabrikats auf dem Brillenglashalbfabrikat aufgebracht sein. Das Zentrum des Brillenglas-Halbfabrikats kann sich auf ein Zentrum der Rückfläche des Brillenglas-Halbfabrikats beziehen. Dadurch kann der der Aufkleber als solcher als Referenz für nachfolgende Fertigungsschritte verwendet werden. Es ergibt sich ein Synergieeffekt, der über die reine Datenübermittlung von in einem Code gespeicherten Daten hinausgeht. Alternativ oder zusätzlich kann der Code des Aufklebers ein Data-Matrix Code sein. Der Data-Matrix Code kann die Referenz für das Koordinatensystem des Brillenglas-Halbfabrikats bilden. Dadurch kann der der Aufkleber als solcher als Referenz für nachfolgende Fertigungsschritte verwendet werden. Es ergibt sich ein Synergieeffekt, der über die reine Datenübermittlung von in einem Code gespeicherten Daten hinausgeht.

Falls nicht anderweitig spezifiziert, sollen die hierin verwendeten Begriffe im Sinne der Norm DIN EN ISO 13666:2013-10 des Deutschen Instituts für Normung e.V. verstanden werden.

Der Begriff Vorderfläche oder objektseitige Fläche bezeichnet gemäß Abschnitt 5.8 der Norm DIN EN ISO 13666:2012 die Fläche eines Brillenglases, die bestimmungsgemäß in der Brille vom Auge abgewandt liegt. Begriff Rückfläche oder augenseitige Fläche bezeichnet gemäß Abschnitt 5.9 der Norm DIN EN ISO 13666:2013-10 die Fläche eines Brillenglases, die bestimmungsgemäß in der Brille dem Auge zugewandt liegt. Die Begriffe Vorderfläche (Vorderseite) bzw. Rückfläche (Rückseite) werden hierbei entsprechend für ein Brillenglas-Halbfabrikat verwendet.

Der Begriff Brillenglas-Halbfabrikat kann im Rahmen der vorliegenden Offenbarung ein Brillenglas bzw. eine Vorstufe eines Brillenglases bezeichnen, welches noch wenigstens einen Fertigungsschritt durchlaufen muss. Beispielhafte Fertigungsschritte sind Bearbeitung wenigstens einer Oberfläche, Einschleifen für einen Rahmen (Edging), Beschichtung, Tönung, etc., nicht jedoch die Montage des fertigen Brillenglases in den Rahmen einer Brille. Ein Brillenglas-Halbfabrikat kann sich insbesondere auf ein einen Linsenrohling, Blank, Brillenglasblank oder Brillenglas-Halbfertigprodukt gemäß wenigstens einem der Abschnitte 8.4.1 oder 8.4.2 der Norm DIN EN ISO 13666:2013-10 beziehen, insbesondere also auf einen Linsenrohling oder Blank mit nur einer optischen fertig bearbeiteten Fläche. Ein Brillenglas-Halbfabrikat kann sich ferner auf ein Brillenglas vor der Randbearbeitung, insbesondere ein ungerandetes Brillenglas gemäß Abschnitt 8.4.7 der Norm DIN EN ISO 13666:2013-10 beziehen.

Bei einem Aufkleber handelt es sich um einen Sticker, welcher vorzugsweise auf einer Seite mit einer Selbstklebefläche ausgestattet, die zur klebenden Befestigung auf Linsenmaterial ausgebildet ist. Der Aufkleber kann chemiebeständig sein. Eine Klebeverbindung bzw. ein Klebstoff des Aufklebers ist vorzugsweise so ausgelegt, dass diese(r) gegen mechanische Einflüsse widerstandsfähig ist.

In einer Ausgestaltung kann vorgesehen sein, dass das Verfahren ein Aufbringen des Aufklebers auf einer Vorder- oder Rückseite des Brillenglas-Halbfabrikats umfasst. Insbesondere kann der Aufkleber auch innerhalb eines Nutzbereichs für eine finale Brillenglasform aufgebracht sein. Ein mechanisches Einprägen in eine Oberfläche des Brillenglas-Halbfabrikats ist nicht erforderlich.

Vorzugsweise kann der Aufkleber ein lösbarer Aufkleber sein. Im Rahmen der vorliegenden Offenbarung kann unter einem lösbaren Aufkleber auch ein zerstörbar entfernbarer Aufkleber verstanden werden. Ein Vorteil dieser Ausgestaltung besteht darin, dass eine vom Aufkleber überdeckte Fläche wieder freigeben werden kann. Somit kann die Fläche erneut einer anderweitigen Nutzung zugeführt werden. Beispielsweise kann die Fläche freigegeben werden, nachdem ein Parameter für einen folgenden Fertigungsschritt ausgelesen wurde. Alternativ kann der Aufkleber auch auf einer Fläche des Brillenglas-Halbfabrikats, welche zumindest Teil eines Nutzbereichs für eine finale Brillenglasform ist, aufgebracht werden.

Optional kann das Verfahren die folgenden Schritte aufweisen:
- Herstellen des Brillenglas-Halbfabrikats durch Formgießen oder Spritz-gießen; Aufbringen des Aufklebers nach dem Formgießen oder Spritzgießen auf dem Brillenglas-Halbfabrikat. Optional, alternativ oder zusätzlich, kann das Verfahren folgende Schritte aufweisen: - Oberflächenbearbeitung einer Vorder- und/oder Rückfläche des Brillenglas-Halbfabrikats; wobei der Schritt des Aufbringens des Aufklebers auf dem Brillenglas-Halbfabrikat vor dem Schritt, insbesondere vor einem ersten Schritt, der Oberflächenbearbeitung der Vorder- und/oder Rückfläche des Brillenglas-Halbfabrikats erfolgt. Insbesondere kann der Aufkleber unmittelbar nach Formgießen oder Spritzgießen z.B. nach Lösen aus der Schale aufgebracht werden. Die Erfinder haben herausgefunden, dass die Kennzeichnung mit einem Aufkleber nachfolgende Verarbeitungsschritte in der Linsenfertigung überstehen kann, so dass trotz Verwendung eines Aufklebers eine Kennzeichnung zu einem sehr frühen Zeitpunkt noch vor weiteren Verarbeitungsschritten zur Oberflächenbearbeitung erfolgen kann.

Optional weist das Verfahren folgenden Schritt aufweisen: - Nachverfolgen des individuellen Brillenglas-Halbfabrikats in der Fertigung über einen mehrstufigen Fertigungsprozess anhand des auf dem Brillenglas-Halbfabrikat aufgebrachten Aufklebers mit dem Code zur eindeutigen Identifikation des Brillenglas-Halbfabrikats (1). Optional, alternativ oder zusätzlich, kann das Verfahren folgende Schritte aufweisen: Auslesen des Codes zur eindeutigen Identifikation des Brillenglas-Halbfabrikats; Abfragen von wenigstens einem Fertigungsparameter (für einen folgenden Verarbeitungsschritt) basierend auf dem Code; und Anwenden des Fertigungsparameters in dem folgenden Verarbeitungsschritt. Insbesondere kann ein Korrekturparameter für einen folgenden Verarbeitungsschritt abgefragt und angewendet werden. Ein Vorteil dieser Ausgestaltung kann in einer besseren Ausbeute in der Fertigung bestehen. Korrekturparameter können beispielsweise durch Analyse von früheren Brillengläsern bzw. Brillenglas-Halbfabrikaten gewonnen werden. Beispielsweise kann der Korrekturparameter etwaigen Trends oder einem Driften von Fertigungsparametern entgegenwirken. Ferner kann sich eine tatsächliche Brechkraft, auch als True Power bezeichnet, beispielsweise bei jedem Gießling in Bezug auf Grundkurve, Position im Batch Polymerisation leicht anders einstellen, ohne dass der Prozess wegdriftet. Ferner kann sich ein tatsächlicher Brechungsindex, auch als True Index bezeichnet, von Halbfabrikat zu Halbfabrikat leicht unterscheiden. Einer oder beide Werte können abgefragt werden und dann später in der Rezeptflächenberechnung als Variable eingehen und somit genauere Rx Brillengläser ermöglichen. Hierbei, insbesondere beim Drift von Fertigungsparameter, können vorzugsweise Verfahren einer sogenannten Big-Data-Analyse zum Einsatz kommen. Ein Fertigungsparameter oder Korrekturparameter kann beispielsweise aus einer Datenbank einer Prozesssteuerung abgefragt werden. Mit anderen Worten enthält der Aufkleber-Code nicht notwendigerweise direkt Parameter oder Daten sondern nur eine eindeutige (optional teilverschlüsselte) Nummer. Die dazugehörigen Informationen und Daten liegen beispielsweise in einer Datenbank, beispielsweise als LODB oder "Lens Order Data Base" bezeichnet, und können abgefragt bzw. abgerufen werden und in einem unmittelbar oder später folgenden Verarbeitungsschritt berücksichtigt werden.

Optional kann das Brillenglas-Halbfabrikat einen in das Brillenglas-Halbfabrikat eingeprägten zweiten Code aufweisen. Der Aufkleber kann derart auf das Brillenglas-Halbfabrikat aufgebracht werden, dass der Aufkleber den zweiten Code zumindest teilweise überdeckt. Ein Vorteil dieser Lösung besteht in einem geringen Flächenbedarf. Ein weiterer Vorteil besteht darin, dass somit wird weniger Fläche abgedeckt wird, was eine Kosmetikprüfung auf der gegenüberliegenden Frontfläche erleichtert.

Insbesondere kann der Aufkleber den zweiten Code vollständig überdecken. Beispielsweise kann ein abgeformter Werkzeugcode vom Casting bzw. Spritzguss deckungsgleich überklebt werden. Beispielsweise kann der Aufkleber einer Genauigkeit von wenigstens einem vom ±2° Drehung und ± 0,5 mm Position auf dem zweiten Code positioniert werden. Ein Vorteil dieser Lösung besteht darin, dass für die nachfolgenden Fertigungsschritte klar ist, welcher Code zur eindeutigen Identifikation zu berücksichtigen ist. Ein Lesegerät muss also nicht zwischen dem Code des Aufklebers und dem abgedeckten zweiten Code unterscheiden. Insbesondere wird kein falscher Code eingelesen. Somit kann eine Fehlerrate reduziert werden.

Vorzugsweise kann das Brillenglas-Halbfabrikat somit einen in das Brillenglas-Halbfabrikat eingeprägten zweiten Code aufweisen, wobei das Verfahren gemäß dem ersten Aspekt ferner dadurch gekennzeichnet sein kann, dass der Aufkleber derart auf dem Brillenglas-Halbfabrikat aufgebracht wird, dass der Aufkleber den in das Brillenglas-Halbfabrikat eingeprägten zweiten Code zumindest teilweise überdeckt. Der zweite Code kann auch derart auf dem Brillenglas-Halbfabrikat aufgebracht werden, dass der Aufkleber den in das Brillenglas-Halbfabrikat eingeprägten zweiten Code vollständig überdeckt.

Insbesondere kann das Brillenglas-Halbfabrikat ferner einen in das Brillenglas-Halbfabrikat eingeprägten dritten Code aufweisen, und wobei der Aufkleber derart auf das Brillenglas-Halbfabrikat aufgebracht wird, dass der Aufkleber den in das Brillenglas-Halbfabrikat eingeprägten dritten Code zumindest teilweise freilässt. Beispielsweise kann es sich bei dem dritten Code um einen menschenlesbaren Code, wie beispielsweise einen alphanumerischen Code handeln. Ein Vorteil dieser Ausgestaltung besteht darin, dass der dritte Code somit weiterhin zugänglich bleibt und beispielsweise eine schnelle Identifikation einer Grundform wie z.B. einer Vorderflächenkrümmung oder eines Materials z.B. aufweisend einen UV-Absorber, ermöglichen kann.

Optional kann das Brillenglas-Halbfabrikat einen in das Brillenglas-Halbfabrikat eingeprägten zweiten Code aufweisen, wobei das Verfahren ferner die Schritte aufweist: Auslesen des Codes des Aufklebers von einer ersten Seite des Brillenglas-Halbfabrikats und Auslesen des eingeprägten zweiten Codes von einer zweiten Seite des Brillenglas-Halbfabrikats. Insbesondere kann der zweite Code auf der ersten Seite des Brillenglas-Halbfabrikats eingeprägt sein; wobei der Aufkleber auf der gleichen Seite des Brillenglas-Halbfabrikats aufgebracht ist wie der zweite Code; und wobei der Aufkleber den zweiten Code vorzugsweise zumindest teilweise überdeckt bzw. überlappt. Ein Vorteil dieser Lösung besteht in einem geringen Flächenbedarf, wobei die jeweiligen Codes dennoch ausgelesen werden können. Da das Brillenglasmaterial durchsichtig ist, kann der eingeprägte Code, obwohl er sich auf der gleichen Seite wie der Aufkleber befindet, durch das Brillenglas hindurch von der anderen Seite aus ausgelesen werden.

Vorzugsweise kann der Aufkleber aus einem Material bestehen, welches zusammen mit Linsenmaterial des Brillenglas-Halbfabrikats recycelbar ist. Alternativ oder zusätzlich kann der Aufkleber aus einem Material bestehen, welches zusammen mit dem Linsenmaterial geschnitten bzw. abgetragen werden kann. Der Aufkleber kann vorzugsweise ein zerspanbarer Aufkleber sein. Ein Vorteil dieser Lösung besteht darin, dass der Aufkleber vor der Oberflächenbearbeitung nicht separat entfernt werden muss. Auch eine nachfolgende Trennung von Linsenmaterial und Aufklebermaterial kann entfallen. Insbesondere kann der Aufkleber damit einer temporären Kennzeichnung während der Fertigung dienen.

Vorzugweise ist der Aufkleber vakuumstabil. Mit anderen Worten ist der Aufkleber derart ausgeführt, dass er im Vakuum nicht ausgast. Vakuum kann hierbei als Druck ≤ 100mbar definiert werden. Beispielsweise ist der Aufkleber derart ausgebildet, dass er im Vakuum nicht mehr als 2, vorzugsweise nicht mehr als 1, vorzugsweise nicht mehr als 0,5, vorzugsweise nicht mehr als 0,1 Masseprozent oder Volumenprozent verliert. Ein Vorteil dieser Ausgestaltung ist, dass der Aufkleber bei weiteren Verarbeitungsschritten auf dem Brillenglas-Halbfabrikat verbleiben kann. Die Linse kann also zusammen mit dem Aufkleber weiter prozessiert werden. Es ist hierbei anzumerken, dass ein Ausgasen bei herkömmlichen Aufklebern mitunter ein technisch gewünschter Vorgang ist, z.B. beim Aushärten von Klebeverbindungen. Beispielsweise kann der Aufkleber einen Klebstoff mit einer Acrylatverbindung aufweisen. Alternativ kann ein vakuumstabiler Silikonklebstoff zum Einsatz kommen. Die Erfinder haben erkannt, dass ein Vorteil dieser Lösung darin bestehen kann, dass selbst bei Hochvakuumprozessen eine optische Fläche nicht kontaminiert wird. Vorzugsweise kommt kein Klebstoff basierend auf Silikonverbindungen zum Einsatz.

Vorzugsweise weist der Aufkleber eine Temperaturstabilität von wenigstens einem von mehr als 100°C, mehr als 115°C, mehr als 130°C oder mehr als 140°C auf. Ein Vorteil dieser Ausgestaltung ist, dass der Aufkleber bei weiteren Verarbeitungsschritten des Brillenglas-Halbfabrikats auf dem Brillenglas-Halbfabrikat verbleiben kann, beispielsweise während des sogenannten Curings oder Härtens. Die Linse kann also zusammen mit dem Aufkleber weiter prozessiert werden.

Vorzugsweise ist der Aufkleber beständig bzgl. einem oder mehreren nachfolgenden Verarbeitungsschritten der Linsenfertigung wie beispielsweise gegenüber Niederdruck oder Hochdruckreinigung, beispielsweise mit Wasser (bzw. sogenanntem Surface scrubbing). Insbesondere ist der Aufkleber derart ausgebildet, dass er eine Hochdruckreinigung mit einem von mehr als 80 bar, mehr als 100 bar, mehr als 120 bar oder mehr als 150 bar übersteht. Vorzugsweise ist der Aufkleber resistent gegenüber Reinigungsmitteln, und/oder Laugen, und/oder (destilliertem) Wasser und/oder KOH. Vorzugsweise ist der Aufkleber UV beständig. Vorzugsweise ist der Aufkleber derart ausgebildet, dass die Klebehaftung bei Vakuumprozessen bestehen bleibt. Vorzugsweise ist der Aufkleber transportstabil, insbesondere temperaturstabil, z.B. bzgl. Temperaturen zwischen -20 °C und +60 °C, und/oder feuchtigkeitsbeständig insbesondere bzgl. Schwankungen der Luftfeuchtigkeit. Vorzugsweise weist der Aufkleber, wenn dieser auf das Brillenglas-Halbfabrikat aufgebracht ist, eine Lagerbeständigkeit von wenigstens 6 Monaten, vorzugsweise von wenigstens 12 Monaten auf. Vorzugsweise ist der Aufkleber derart ausgebildet, dass er auf einer rauen Oberfläche haftet, insbesondere einer durch Lasergravur (Laser Engraving) bearbeiteten Oberfläche. Vorzugsweise weist der Aufkleber eine reflexarme Oberfläche auf. Ein Vorteil dieser Ausgestaltung ist eine bessere Lesbarkeit.

Vorzugsweise kann der Aufkleber halbtransparent ausgebildet sein. Ein Vorteil dieser Ausgestaltung besteht darin, dass eine visuelle Inspektion weiterhin möglich ist. Insbesondere bei Verwendung großflächiger Aufkleber kann also weiterhin eine Prüfung etwaiger darunter liegender Defekte erfolgen.

In einer Ausgestaltung des Verfahrens kann der Aufkleber eine Referenz für zumindest einen Kontrollbereich oder ein Koordinatensystem des Brillenglas-Halbfabrikats, insbesondere eine Referenz für ein Koordinatensystem mit vier Quartilen, bilden. Beispielsweise kann ein konventionell eingravierter oder eingeprägter Referenzpunkt oder Code durch den Aufkleber ersetzt oder ergänzt werden. Ein abgegossener oder gespritzter Werkzeugcode z.B. einer Formschale liegt üblicherweise in einer vorbestimmten Lage. Beispielsweise werden beim Abgießen die Formschalen mit Code so eingesetzt, dass der Code in der Senkrechten an einem Einfülltrichter ist. Somit ist die Position beim Überkleben mit Aufkleber klar und kann durch den Aufkleber als neue Referenz erhalten werden. Insbesondere kann der Aufkleber auf einer bereits fertig prozessierten Oberfläche des Brillenglas-Halbfabrikats aufgebracht sein und dort eine Referenz bilden, ohne dass die fertige Oberfläche beschädigt wird. Beispielsweise liegt ein abgegossener oder gespritzter Werkzeugcode, z.B. einer Formschale, immer in einer bestimmten Lage. Beispielsweise werden beim Abgießen die Formschalen mit Code so eingesetzt, dass der Code in der Senkrechten am Einfülltrichter ist. Somit ist die Position beim Überkleben mit Aufkleber klar.

Vorzugsweise kann der Aufkleber Information bezüglich der Lage und/oder Art von Defekten im Brillenglas-Halbfabrikat aufweisen. Beispielsweise können Koordinaten von beim Gießen entstehenden Bläschen im Brillenglas-Halbfabrikat oder Linsenrohling hinterlegt sein.

Vorzugsweise weist der Aufkleber einen Code mit zumindest einem Fertigungsparameter für einen nachgelagerten Verarbeitungsschritt auf. Ein Vorteil dieser Ausführungsform besteht darin, dass derartige Information direkt, beispielsweise durch einen den auf dem Brillenglas-Halbfabrikat enthaltenen Code, an einen nachgelagerten Fertigungsschritt übergeben werden können. So kann mittels des Aufklebers beispielsweise eine Fertigungsmaschine eingestellt werden. Optional kann der Fertigungsparameter auf dem Aufkleber mit einem für dieses Brillenglas-Halbfabrikat geplanten Fertigungsparameter abgeglichen werden und somit eine Plausibilisierung oder Fehlerkorrektur erfolgen. So kann beispielsweise ein falsch einsortiertes Element erkannt werden. Als Fertigungsparameter können Information bzgl. Prozessparametern, Eigenschaften einer herzustellenden Oberfläche, etc. verstanden werden. Der Aufkleber bzw. der Code des Aufklebers kann einen Fertigungsparameter unmittelbar aufweisen, d.h. encodiert im Code oder mittelbar aufweisen, wobei mittels des Codes zur eindeutigen Identifikation ein oder mehrere zugehörige Fertigungsparameter aus einer Datenbank abgerufen werden können.

Optional kann der Aufkleber wenigstens ein Merkmal zur Echtheitsprüfung und/oder eine Farbcodierung aufweisen. Beispielsweise können ein Hologramm, Logo, Wasserzeichen, oder ein anders Merkmal zur Echtheitsprüfung vorgesehen sein. Das Merkmal zur Echtheitsprüfung kann ein Code sein, welcher Bestandteil eines Hologramms sein kann. Ein Vorteil dieser Lösung ist, dass die Echtheit bzw. Herkunft des Brillenglas-Halbfabrikats verifiziert werden kann. Ein Vorteil einer Farbcodierung besteht in einer einfachen visuellen Identifikation, beispielsweise unmittelbar durch einen Nutzer. Optional können durch die Farbcodierung weitere Information abgebildet werden, z.B. unterschiedliche UV Transmissionen des Substratmaterials. Somit können dieselben Formschalen für unterschiedliche Materialeigenschaften genutzt werden und die Produktdifferenzierung erfolgt über die Farbcodierung.

Optional kann die Vorrichtung gemäß dem vierten Aspekt dazu ausgebildet sein, einen in das Brillenglas-Halbfabrikat eingeprägten zweiten Code auszulesen, basierend auf dem eingeprägten zweiten Code eine Krümmung des Brillenglas-Halbfabrikats zu bestimmen, und den lösbaren Aufkleber unter Berücksichtigung der Krümmung des Brillenglas-Halbfabrikats auf das Brillenglas-Halbfabrikat aufzubringen. Üblicherweise weisen Brillenglas-Halbfabrikate gekrümmte Flächen auf. Dies kann beim Aufbringen eines Aufklebers zu Faltenbildung führen. Indem basierend auf dem eingeprägten zweiten Code, welcher vorzugsweise Informationen über die Krümmung des Brillenglashalbfabrikats aufweist oder zumindest eine Abfrage derartiger Informationen ermöglicht, die Krümmung des Brillenglas-Halbfabrikats bestimmt werden kann, ist keine aufwendige Vermessung der Krümmung vor Aufbringen des Aufklebers erforderlich. Folgerichtig kann der Aufkleber auf einfache Art und Weise unter Berücksichtigung der Krümmung aufgebracht werden, wodurch die Faltenbildung vermieden oder zumindest reduziert werden kann.

Die vorstehend für den ersten Aspekt der Offenbarung ausführlich beschriebenen Vorteile gelten für die weiteren Aspekte entsprechend.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Offenbarung sind in der Zeichnung dargestellt und werden in der nachfolgenden Beschreibung näher erläutert.
- Fig. 1: zeigt Elemente zum Formgießen eines Brillenglas-Halbfabrikats;
- Fig. 2: zeigt das Aufbringen eines Aufklebers auf einem Brillenglas-Halbfabrikat;
- Fig. 3: zeigt ein Flussdiagramm von Verfahrensschritten im Kontext des Formgießens;
- Fig. 4: zeigt ein Flussdiagramm von Verfahrensschritten im Kontext des Spritzgießens;
- Fig. 5: zeigt eine schematische Darstellung einer Vorrichtung zum Aufbringen eines Aufklebers auf ein Brillenglas-Halbfabrikat;
- Fig. 6: zeigt ein Flussdiagramm von der Massenproduktion von Brillenglas-Halbfabrikaten bis zur Auslieferung beim Nutzer;
- Fig. 7: zeigt eine Darstellung eines beispielhaften Brillenglas-Halbfabrikats mit einem Aufkleber;
- Fig. 8: zeigt eine zweite Darstellung eines Brillenglas-Halbfabrikats mit einem Aufkleber;
- Fig. 9: zeigt ein Brillenglas-Halbfabrikat mit Defekten;
- Fig. 10: zeigt eine weitere Darstellung eines Brillenglas-Halbfabrikats mit einem Aufkleber;
- Fig. 11: zeigt eine weitere Darstellung eines Brillenglas-Halbfabrikats mit einem Aufkleber;
- Fig. 12A-C: zeigen Darstellungen von einem Brillenglas-Halbfabrikat mit einem Aufkleber mit einem Code und einem in das Brillenglas-Halbfabrikat eingeprägten zweiten Code;
- Fig. 13A-B: zeigen Darstellungen von einem Brillenglas-Halbfabrikat mit einem Aufkleber mit einem Code, einem in das Brillenglas-Halbfabrikat eingeprägten zweiten Code und einem weiteren alphanumerischen Code; und
- Fig. 14: zeigt ein Flussdiagramm eines Verfahrens.

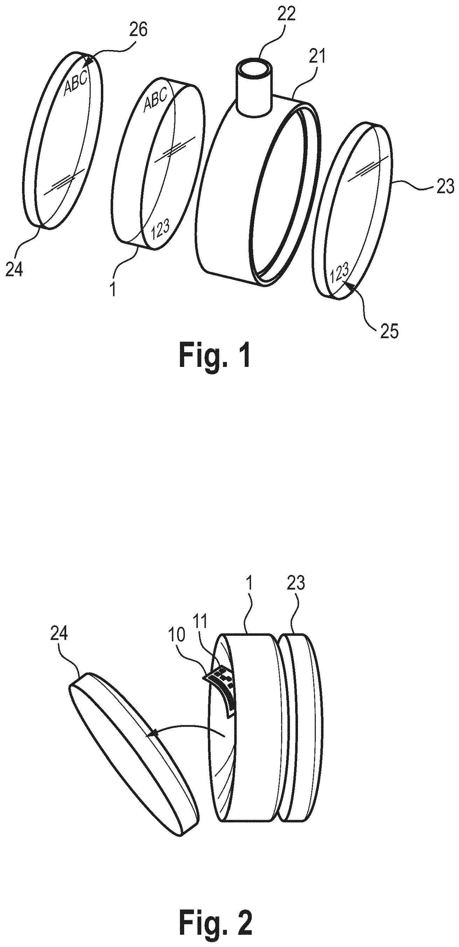

Fig. 1 zeigt eine aus dem Stand der Technik bekannte Werkzeugform zum sogenannten Formgießen. Die Werkzeugform weist ein zentrales Element 21 mit einem Ansatz 22 sowie einer vorderseitigen Werkzeugform bzw. Formschale 23 und einer rückseitigen Werkzeugform bzw. Formschale 24 auf. Beim Formgießen kommt in der Brillenoptik üblicherweise der Duroplast Allyldiglycolcarbonat zum Einsatz, welcher beispielsweise unter dem Handelsnamen CR39 bekannt ist. Dieser kann durch den Ansatz 22 in das Element 21 auch eingefüllt werden, welches vorderseitig durch die Werkzeugform 23 und rückseitig durch die Werkzeugform 24 abgeschlossen ist. Damit wird ein Brillenglas-Halbfabrikat 1 hergestellt.

Neben der gewünschten Oberflächenform kann die vorder- und/oder rückseitige Werkzeugform 23, 24 einen Code 25, 26 aufweisen, welcher entsprechend in das Brillenglas-Halbfabrikat eingeprägt wird. Ein in der Werkzeugform eingeprägter Code wird also beim Gießen auf jedes mit dieser Werkzeugform 23, 24 hergestellte Brillenglas-Halbfabrikat 1 übertragen bzw. abgeformt. Eine eindeutige Identifikation eines einzelnen Brillenglas-Halbfabrikats 1 ist jedoch nicht möglich, sondern lediglich eine nachträgliche Zuordnung von Werkzeug und Brillenglas-Halbfabrikat.

Fig. 2 zeigt demgegenüber die Kennzeichnung eines Brillenglas-Halbfabrikats 1 gemäß der vorliegenden Offenbarung, wobei ein (lösbarer) Aufkleber 10 auf das Brillenglas Halbfabrikat 1 aufgebracht wird. Vorzugsweise kann der Aufkleber 1 einen Code 11 zur eindeutigen Identifikation des Brillenglas-Halbfabrikats 1 aufweisen. Im vorliegenden Ausführungsbeispiel wird der Aufkleber 10 auf einer Rückfläche des Brillenglas-Halbfabrikats 1 aufgebracht, nachdem die rückseitige Werkzeugform 24 die rückseitige Fläche des Brillenglas-Halbfabrikats 1 freigegeben hat. Dies ist schematisch durch den Pfeil dargestellt.

Vorzugsweise kann der Aufkleber somit zu einem möglichst frühen Zeitpunkt wenn nicht gar dem frühest möglichen Zeitpunkt auf dem Brillenglas-Halbfabrikat aufgebracht. Der Aufkleber kann insbesondere vor einem ersten Schritt der Oberflächenbearbeitung der Vorder- und/oder Rückfläche des Brillenglas-Halbfabrikats aufgebracht werden. Somit können individuelle Brillenglas-Halbfabrikate ab Beginn der Fertigung nachverfolgt werden.

Bei dem Code 11 kann es sich vorzugsweise um einen maschinenlesbaren Code wie beispielsweise einen QR-Code oder DMC-Code handeln. Alternativ oder zusätzlich kann ein alphanumerischer Code vorgesehen sein. Alternativ oder zusätzlich kann eine Farbcodierung vorgesehen sein. Ein Vorteil dieser Ausgestaltung ist eine schnelle visuelle Identifikation.

Optional kann der Aufkleber 10 und/oder Code 11 eine Größe von wenigstens einem vom wenigstens 1mm², wenigstens 4mm², wenigstens 9mm², wenigstens 16mm², wenigstens 25mm², wenigstens 36mm², wenigstens 64mm², wenigstens 100mm², wenigstens 144mm², wenigstens 196mm², wenigstens 256mm², wenigstens 324mm², und wenigstens 400mm² aufweisen. Ein Vorteil eines lösbaren Stickers kann darin bestehen, dass er größer sein kann, als ein permanent eingeprägter Code. Damit können die (maschinelle und menschliche) Lesbarkeit erleichtert und ein Risiko von Auslesefehlern verringert werden.

Die Massenherstellung von Brillengläsern erfolgt üblicherweise in einem mehrstufigen Fertigungsprozess. Beispielsweise werden zunächst Brillenglas-Halbfabrikate in großer Stückzahl hergestellt. Diese Brillenglas-Halbfabrikate können in nachfolgenden Verarbeitungsschritten an die genaue erforderliche optische Wirkung eines Nutzers angepasst werden, beschichtet werden, und nachfolgend an eine gewünschte Rahmenform des Nutzers angepasst werden.

Die Herstellung der Brillenglas-Halbfabrikate erfolgt nicht notwendigerweise am gleichen Ort wie beispielsweise eine nachfolgende nutzerspezifische Anpassung. Indem ein Aufkleber, welcher einen Code zur eindeutigen Identifikation des Brillenglas-Halbfabrikats aufweist, bereits in einem frühen Stadium der Fertigung auf das Brillenglas-Halbfabrikat aufgebracht wird, kann ein individuelles Linsenelement über vorzugsweise den gesamten Fertigungsprozess kontinuierlich identifiziert und nachverfolgt werden. Vorzugsweise über den gesamten Fertigungsprozess von der Massenherstellung der Blanks, über die kundenspezifische Anpassung, bis zur Übergabe an den Kunden.

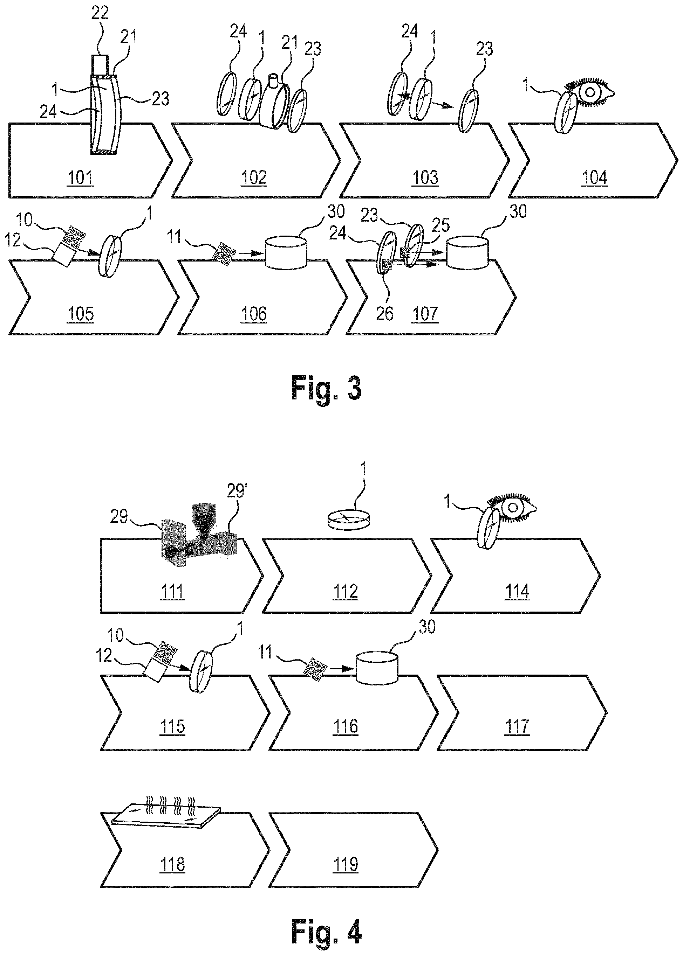

Fig. 3 und 4 zeigen beispielhafte Abläufe zur Herstellung eines Brillenglas-Halbfabrikats einschließlich Aufbringen eines Aufklebers auf dem Brillenglas-Halbfabrikat mittels Formgießen (Fig. 3) und Spritzgießen (Fig. 4).

Gemäß Fig. 3 kann das Brillenglas-Halbfabrikat 1 in einem ersten Schritt 101 durch Formgießen hergestellt werden. Beispielsweise mit einer Vorrichtung, wie bereits in Fig. 1 gezeigt. In einem zweiten Schritt 102 wird zunächst das Element 21 entfernt und nachfolgend in Schritt 103 werden die vorderseitige Werkzeugform 23 und die rückseitige Werkzeugform 24 geöffnet. In einem optionalen nächsten Schritt 104 kann eine visuelle Inspektion des Brillenglas-Halbfabrikats 1 erfolgen.

Im nächsten Schritt 105 wird das Brillenglas-Halbfabrikat 1 gekennzeichnet durch Aufbringen eines Aufklebers 10 auf dem Brillenglas-Halbfabrikat 1, wobei der Aufkleber 1 einen Code 11 zur eindeutigen Identifikation des Brillenglas-Halbfabrikats 1 aufweist. Optional kann ein weiterer Aufkleber 12 vorgesehen sein, welcher beispielsweise ein Merkmal zur Echtheitsprüfung und/oder eine Farbcodierung aufweist, beispielsweise ein Hologramm. Derartige Elemente können jedoch auch Teil des Aufklebers 10 sein.

Wie in Schritt 106 gezeigt, kann der Code des Aufklebers 10 in einer Datenbank 30 registriert werden. Somit wird das eindeutig identifizierte Brillenglas Halbfabrikat 1 erfasst. Vorzugsweise werden in Schritt 107 zusätzlich ein Code 25 des vorderseitigen Formwerkzeugs 23 und/oder ein zweiter Code 26 des rückseitigen Formwerkzeugs 24 erfasst. Dies kann ebenfalls in der Datenbank 30 erfolgen. Indem der Code zur eindeutigen Identifikation des Brillenglas-Halbfabrikats vorzugsweise zusammen mit einem oder mehreren Codes des Formwerkzeugs erfasst werden, kann eine eindeutige Zuordnung erfolgen. Somit ist es nicht mehr erforderlich, die jeweiligen gegebenenfalls in das Brillenglas-Halbfabrikat eingeprägten einzelnen Codes auszulesen, sondern kann eine Auswertung des eindeutigen Codes 11 erfolgen. Es versteht sich, dass bei diesem Vorgehen auch auf andere Art und Weise eine Zuordnung der bei der Fertigung verwendeten Werkzeugformen wie beispielsweise Krümmungsradien der Vorder- und/oder Rückseite des Brillenglas-Halbfabrikats 1 zu dem Code 11 zur eindeutigen Identifikation des Brillenglas-Halbfabrikats erfolgen kann. Optional ist es auch nicht erforderlich, dass der entsprechende Code hardwareseitig durch die Werkzeugelemente in eine Oberfläche des Brillenglas-Halbfabrikats eingeprägt wird. Somit kann ein nutzbarer Bereich des Brillenglas-Halbfabrikats vergrößert werden, was insbesondere bei großen Linsenelementen vorteilhaft sein kann.

Fig. 4 zeigt eine Abwandlung des Verfahrens aus Fig. 3, wobei das Brillenglas-Halbfabrikat 1 durch Spritzgießen hergestellt wird. Der grundsätzliche Ablauf des Spritzgießens wurde bereits eingangs beschrieben.

In Schritt 111 wird ein Kunststoffmaterial in einem Spritzzylinders oder Extruders 29' aufgeschmolzen und mit hohem Druck in eine Werkzeugform 29 zur Herstellung eines Brillenglas-Halbfabrikats 1 eingespritzt. In Schritt 112 wird das Brillenglas-Halbfabrikat entnommen und optional beschichtet. Im optional nachfolgenden Schritt 114 kann eine visuelle Inspektion durchgeführt werden. Optional kann es sich hierbei um eine kamerabasierte visuelle Inspektion handeln, bei welcher eine Position von Defekten wie beispielsweise Lufteinschlüssen bestimmt wird. Basierend auf Kenntnis dieser Defekte kann nachfolgend ein nutzbarer Bereich definiert werden. Beispielsweise kann eine Form für ein fertiges Brillenglas derart auf dem Brillenglas-Halbfabrikat derart gewählt werden, dass dieses von den Defekten nicht betroffen ist. Somit kann der Ausschuss verringert werden. Optional können derartige Informationen im Code des Brillenglas-Halbfabrikats enthalten bzw. mit diesem verknüpft sein.

Die nachfolgenden Schritte 115 und 116 können den bereits vorstehend beschriebenen Schritten 105 und 106 entsprechen. In Schritt 117 kann, analog zu Schritt 107, eine Verbindung bzw. Verknüpfung zwischen dem eindeutigen Code des Aufklebers 11 und der Werkzeugform 29 hergestellt werden. Dies wird auch als sogenanntes Matching bezeichnet.

In einem optionalen Schritt 118 kann das Linsenmaterial gehärtet werden, beispielsweise durch Exposition von UV-Strahlung oder Durchlaufen einer Wärmebehandlung. Vorzugsweise weist der Aufkleber eine Temperaturstabilität von wenigstens 100 °C, insbesondere mehr als 115 °C, insbesondere mehr als 130 °C auf.

Optional kann das Brillenglas-Halbfabrikat in Schritt 119 einem oder mehreren Nachverarbeitungsprozessen unterzogen werden. Beispielhafte Postprozesse sind (i) Härten, beispielsweise nach dem Spritzgießen, bei 130 °C-140 °C und optional einer Dauer von mehr als 2, insbesondere mehr als 5 Stunden; (ii) Oberflächenreinigung, wie Reinigen mit niedrigem oder hohem Wasserdruck; (iii) nasschemische Reinigung und/oder Aktivierung mit einem Spülmittel oder destilliertem Wasser; (iv) Oberflächenbeschichtung, wobei der Aufkleber vorzugsweise temperaturbeständig ist, beständig gegenüber ätzenden Substanzen wie beispielsweise KOH oder einer UV-Härtung; (v) Antireflexbeschichtung, vorzugsweise auf derjenigen Seite des Brillenglas-Halbfabrikats, auf welcher der Aufkleber nicht angebracht ist, wobei der Aufkleber hierfür vorzugsweise vakuumbeständig ausgebildet ist und insbesondere nicht ausgast. Vorzugsweise ist der Aufkleber transportstabil, insbesondere beständig gegenüber Umwelteinflüssen wie Temperatur zwischen -20 °C und +60 °C, feuchtigkeitsbeständig und reibebeständig. Der Aufkleber kann eine Lagerfähigkeit von vorzugsweise nicht weniger als 6, insbesondere von nicht weniger als 12 Monaten aufweisen. Der Aufkleber kann aus einem Material besteht, welches zusammen mit Linsenmaterial recycelbar ist und/oder mit dem Linsenmaterial zusammen abgetragen werden kann.

Indem das Brillenglas-Halbfabrikat durch den Aufkleber zur eindeutigen Identifikation des Brillenglas-Halbfabrikats gekennzeichnet ist, können bereits frühe Verarbeitungsschritte individualisiert werden. Beispielsweise kann bereits in der Massenfertigung ein sogenannter "Single-Piece-Flow", vorzugsweise ein nutzerspezifischer Auftrag gestartet werden. Damit können auch Schritte der Massenfertigung, wie Härten, etc. bereits nutzerindividuell ausgestaltet werden. Somit kann vorzugsweise bereits in den führen Fertigungsschritten, welche bisher nicht nutzerspezifisch waren, eine Individualisierung erfolgen. Beispielsweise kann ein sogenannter Post-Curing-Prozess bereits je nach gewünschtem Endprodukt individualisiert werden. Vorzugsweise kann auf einen zwischengeschalteten Lagerprozess (DC) verzichtet werden.

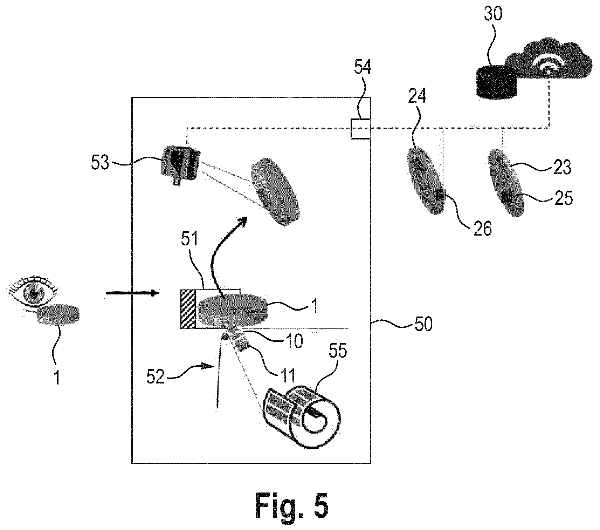

Fig. 5 zeigt eine Vorrichtung 50 zum Prozessieren eines Brillenglas-Halbfabrikats 1. Es versteht sich, dass nicht sämtliche Prozessierungsschritte von dieser einen Vorrichtung durchgeführt werden müssen, sondern weitere Vorrichtungen vorgesehen sein können. Die Vorrichtung 50 weist eine Aufnahme 51 für ein Brillenglas-Halbfabrikat 1 auf sowie eine Vorrichtung 52 zum Aufbringen eines Aufklebers 10 auf das Brillenglas-Halbfabrikat 1, wobei der Aufkleber 10 vorzugsweise einen Code 11 zur eindeutigen Identifikation des Brillenglas-Halbfabrikats 1 aufweist.

Optional kann die Vorrichtung 50 ferner eine Leseeinrichtung 53 zum Lesen des Codes 11 aufweisen und eine Datenschnittstelle 54, wobei die Vorrichtung 50 dazu ausgebildet ist, den Code in einer Datenbank 30 zu registrieren bzw. zu speichern. Im vorliegenden Beispiel ist eine Mehrzahl von Aufklebern auf einer Rolle 55 vorgesehen, von welcher diese dann mittels der Vorrichtung 52 zum Aufbringen des Aufklebers auf das Brillenglas-Halbfabrikat 1 aufgebracht werden.

Die bereits vorstehend mit Bezug auf die Schritte 107 in Fig. 3 und 117 in Fig. 4 beschriebene Zuordnung einer oder mehrerer Werkzeugformen 23, 24, 29 zur Herstellung des Brillenglas-Halbfabrikats kann optional ebenfalls in der Vorrichtung 50 erfolgen oder alternativ ein nachgelagerter oder vorgelagerte Schritt sein.

Optional kann die Vorrichtung (50) ferner dazu ausgebildet sein, einen in das Brillenglas-Halbfabrikat eingeprägten zweiten Code (25, 26) auszulesen; basierend auf dem eingeprägten zweiten Code (25, 26) eine Krümmung des Brillenglas-Halbfabrikats (1) zu bestimmen; und den lösbaren Aufkleber (10) unter Berücksichtigung der Krümmung des Brillenglas-Halbfabrikats auf das Brillenglas-Halbfabrikat aufzubringen. Hierfür kann die Vorrichtung (52) winkelverstellbar gelagert sein und eine Lage der Vorrichtung (52) relativ zum Brillenglas-Halbfabrikat auf Basis der Krümmung des Brillenglas-Halbfabrikats eingestellt werden, sodass der Aufkleber (10) unter Berücksichtigung der Krümmung des Brillenglas-Halbfabrikats auf das Brillenglas-Halbfabrikat aufgebracht wird. Insbesondere kann damit eine Faltenbildung vermieden werden.

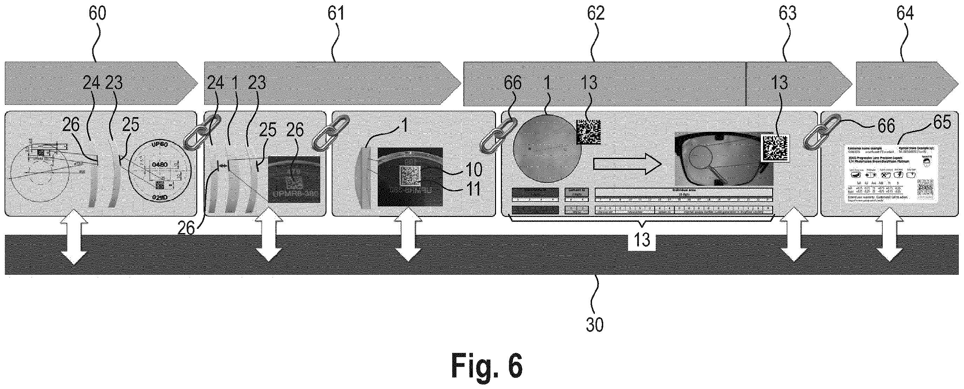

Fig. 6 zeigt verschiedene Verfahrensschritte 61, 62, 63, 64 zur Herstellung eines Brillenglases. In einem vorgelagerten Schritt 60 können die Werkzeugformen bzw. Molds 23, 24 bereitgestellt werden. Die vorderseitige und/oder rückseitige Werkzeugform 23, 24 können einen Code 25, 26 aufweisen. Mit solchen Werkzeugformen kann in einem ersten Schritt 61 die Massenherstellung von Brillenglas-Halbfabrikaten erfolgen. Dabei kann der vorder- und/oder rückseitige Code 25, 26 der Werkzeugformen in das Brillenglas-Halbfabrikat eingeprägt werden. Vorzugsweise werden die Codes 25, 26 in einer Datenbank 30 registriert.

Bereits bei der Massenherstellung 61 können gemäß der vorliegenden Offenbarung Aufkleber 10 mit einem Code 11 zur eindeutigen Identifikation auf die Brillenglas-Halbfabrikate aufgebracht werden. Die Codes können in einer Datenbank 30 registriert werden. Insbesondere kann ein Code 11 eines Aufklebers 10 über die Datenbank 30 mit dem oder den Codes 25, 26 der zugehörigen Werkzeugform(en) verknüpft werden. Es kann daher ausreichen, nur noch den Code 11 des Aufklebers 10 auszulesen, anstatt sowohl einen vorderseitigen Code 25 einer vorderseitigen Werkzeugform 23 also auch einem rückseitigen Code 26 einer rückseitigen Werkzeugform 24. Nachfolgend können die Brillenglas-Halbfabrikate 1 weiteren Bearbeitungsschritten unterzogen werden. Dank des individuellen Codes kann eine Verknüpfung 66 zwischen den individuellen Brillenglas-Halbfabrikaten 1 aus der Massenproduktion 61 und der gegebenenfalls bereits nutzerspezifischen Prozessierung 62 und Individualisierung 63 erfolgen.

Optional kann ein, vorzugsweise eindeutiger, Code 13 auf das Brillenglas-Halbfabrikat 1 oder, je nach Prozessschritt, auf das fertige Brillenglas aufgebracht werden. Dies kann im Rahmen der kundenspezifischen Prozessierung 62 erfolgen, wie in Fig. 6 gezeigt. Der Code 13 kann erneut in einer Datenbank 30 registriert und mit wenigstens einem der Codes 11, 25, 26 verknüpft werden. Optional kann der Code 13 dem Code 11 entsprechen. Ein Vorteil dieser Ausgestaltung besteht darin, dass auf einfache Weise eine eindeutige Zuordnung erreicht wird. Beispielsweise kann der Code 11 innerhalb einer Maschine kopiert und auf das Brillenglas bzw. Brillenglashalbfabrikat aufgebracht werden z.B. mittels Lasergravur. In diesem Fall ist nicht einmal eine Datenbankanbindung erforderlich. Beispielsweise wird bei der Prozessierung 62 diejenige Fläche, auf welcher der Aufkleber 10 mit dem Code 11 aufgebracht ist, bearbeitet. Beispielsweise erfolgt eine zerspanende Bearbeitung, bei welcher der Aufkleber zusammen mit Brillenglasmaterial mit abgetragen bzw. zerstörbar entfernt wird. Dank des Codes 13 ist eine eindeutige Identifizierung auch nach Entfernen des Aufklebers weiterhin möglich. In den vorhergehenden Fertigungsschritten bietet der Aufkleber 10 mit dem Code 11 vorzugsweise eine einfachere (maschinelle) Lesbarkeit als ein eingravierter oder eingeprägter Code 25, 26, 13.

Vorzugsweise kann der Aufkleber 10 einen Code mit zumindest einem Fertigungsparameter für einen nachgelagerten Verarbeitungsschritt aufweisen. Beispielsweise kann eine aufzubringende Beschichtung oder wenigstens ein Parameter einer zu fertigenden Oberfläche encodiert sein. Alternativ oder zusätzlich weist der Aufkleber einen Code (zur eindeutigen Identifikation des Brillenglas-Halbfabrikats) auf, auf dessen Basis zumindest ein Fertigungsparameter aus einer Datenbank abgefragt werden kann. Optional enthält der Code selbst überhaupt keine Parameter, wobei alle Parameter in einer Datenbank liegen. Nach der kundenspezifischen Anpassung 63 erfolgt die Übergabe an den Kunden zu dessen Verwendung in Schritt 64. Hierbei kann erneut eine Verknüpfung 66 erfolgen und dem Kunden optional eine Dokumentationskarte 65 über das für ihn kundenspezifisch angepasste Brillenglas überreicht werden. Optional kann hierbei erneut eine Verknüpfung mit der Datenbank 30 erfolgen.

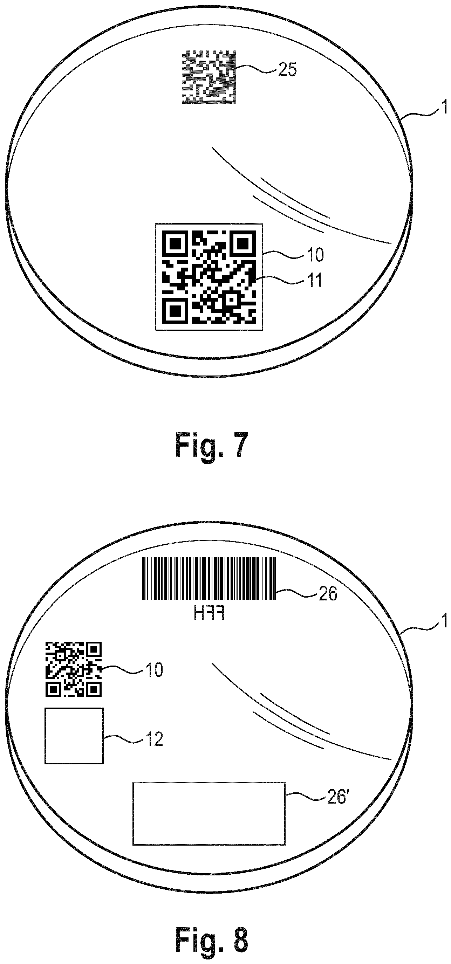

Fig. 7 zeigt eine Darstellung eines weiteren Ausführungsbeispiels eines Brillenglas-Halbfabrikats 1 mit einem Aufkleber 10, wobei der Aufkleber einen Code 11 zur eindeutigen Identifikation des Brillenglas-Halbfabrikats aufweist. Der Aufkleber kann ein lösbarer Aufkleber oder ein zerstörbar entfernbarer Aufkleber sein. Ein lösbarer Aufkleber kann sich auf einen Aufkleber beziehen, welcher wieder, vorzugsweise rückstandslos, von dem Brillenglas-Halbfabrikat 1 entfernt werden kann. Vorzugsweise kann der Aufkleber erneut auf das Brillenglas-Halbfabrikat aufgebracht werden, beispielsweise nach einer zwischenzeitlichen Oberflächenbearbeitung. Ein zerstörbar entfernbarer Aufkleber kann sich auf einen Stick beziehen, welcher zwar entfernt werden kann, jedoch dabei zerstört wird. Dies kann insbesondere dann vorteilhaft sein, wenn der Aufkleber der Echtheitsprüfung dient, da der Aufkleber dann nicht wiederverwendet werden kann.

Vorzugsweise besteht der Aufkleber 10 aus einem Material, welches zusammen mit dem Linsenmaterial, aus welchem das Brillenglas-Halbfabrikat 1 hergestellt ist, recycelbar ist. Beispielsweise kann in diesem Fall eine Oberflächenbearbeitung derjenigen Oberfläche, auf welcher der Aufkleber 10 aufgebracht ist, erfolgen, ohne den Aufkleber vorher entfernen zu müssen.

Optional kann der Aufkleber halbtransparent ausgebildet sein. Somit ist eine visuelle Inspektion des Brillenglas-Halbfabrikats 1 weiterhin möglich. Optional kann das Brillenglas-Halbfabrikat, wie in Figur 7 gezeigt, noch einen konventionell eingeprägten zweiten Code 25 aufweisen. Beispielsweise kann es sich hierbei um einen direkt lesbaren alphanumerischen Code handeln oder um einen maschinenlesbaren Code. Im vorliegenden Beispiel ist ein maschinenlesbarer zweidimensionaler DMC-Code vorgesehen.

Fig. 8 zeigt eine Darstellung einer weiteren Ausführungsform eines Brillenglas-Halbfabrikats 1 mit einem Aufkleber 10. Hierbei ist der maschinenlesbare Code 26 in Form eines Barcodes mit einem zusätzlichen alphanumerischen Element ausgeführt, welches hierbei, da dieses auf der Vorderseite liegt, spiegelverkehrt wiedergegeben ist. Optional kann ein weiteres Feld 26' für weitere Codes vorgesehen sein. Im vorliegenden Beispiel ist zusätzlich ein Merkmal zur Echtheitsprüfung in Form eines Hologramms 12 vorgesehen.

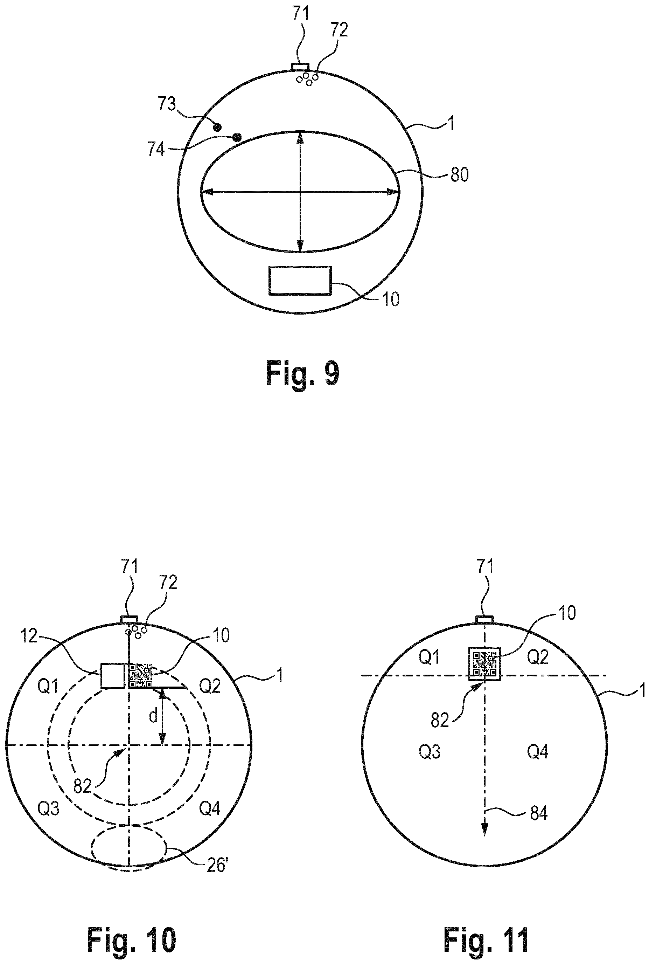

Fig. 9 zeigt eine Darstellung eines Brillenglas-Halbfabrikats 1 mit Defekten 72, 73, 74. An der Oberseite des Brillenglas-Halbfabrikats 1 ist ein Ansatz 71 zu erkennen, mittels welchem das Brillenglasmaterial eingefüllt wurde. In diesem Bereich kann es zur Bildung von Blasen 72 kommen. Es handelt sich hierbei um Defekte, durch welche dieser Bereich nicht für eine endgültige Brillenglasform nutzbar ist. Eine beispielhafte finale Brillenglasform ist in Fig. 9 mit Bezugszeichen 80 bezeichnet. Innerhalb der finalen Brillenglasform 80 sollen keine Defekte liegen.

Im vorliegenden Fall weist das Brillenglas-Halbfabrikat 1 neben den Blasen 72 noch weitere Defekte 73 und 74 auf. Da diese jedoch außerhalb des Bereichs des finalen Brillenglases 80 liegen, sind diese nicht relevant. Vorzugsweise weist das Brillenglas-Halbfabrikat 1 einen Aufkleber 10 auf, welcher Informationen über einen potenziell nutzbaren Bereich 80 für ein finales Brillenglas und/oder Informationen über die Lage von Defekten 72, 73, 74 enthält. Auf Basis der Lage der Defekte kann somit ein nutzbarer Bereich bestimmt werden. Wenn beispielsweise für ein kleines finales Brillenglas lediglich ein kleiner nutzbarer Bereich erforderlich ist, kann ein derartiges Brillenglas-Halbfabrikat 1 trotz der Defekte 72, 73, 74 weiterhin zur Herstellung verwendet werden, so dass der Ausschuss reduziert werden kann. Es versteht sich, dass die entsprechende Information über Defekte auch in einer Datenbank hinterlegt werden kann, welche mittels eines eindeutigen Codes auf dem Aufkleber 10 verknüpft werden kann.

Optional kann der Aufkleber 10 auch Informationen über den Herstellungsprozess enthalten, beispielsweise bei Herstellungsproblemen bezüglich eines Werkzeuges, Einschlüssen, der Polymerisation, Prozessparameter, Umgebungsparameter oder Informationen über die optischen Eigenschaften wie die Brechkraft der Vorder- und/oder Rückfläche. Es versteht sich, dass derartige Informationen alternativ oder zusätzlich auch über den Code des Aufklebers aus einer Datenbank, beispielsweise der LODB, abgerufen werden können.

Fig. 10 zeigt eine Darstellung einer weiteren Ausführungsform. In diesem Fall ist erneut ein Aufkleber 10 auf dem Brillenglas-Halbfabrikat 1 aufgebracht. Im vorliegenden Fall kann der Aufkleber zur Kennzeichnung bzw. als Referenz zum Kennzeichnen von Kontrollbereichen bzw. als Referenz für ein Koordinatensystem, hier mit Quartilen (Q1, Q2, Q3, Q4) verwendet werden. Alternativ oder zusätzlich kann der Marker 10 auch als Referenzpunkt verwendet werden. Beispielsweise kann der Aufkleber eine horizontale Mitte und/oder eine vertikale Lage, hier mit einem Offset d gegenüber der Horizontalen, angeben. Optional kann ein zusätzlicher Aufkleber 12 oder weiterer Bereich 12 des Aufklebers 10 vorgesehen sein. Hierauf kann weitere Information gespeichert sein und/oder ein Merkmal zur Echtheitsprüfung wie ein Hologramm vorgesehen sein. Im unteren Bereich 26' können optional weitere Codes aufgebracht werden.

Fig. 11 zeigt eine weitere Darstellung eines Brillenglas-Halbfabrikats 1 mit einem Aufkleber 10, ähnlich der in Fig. 10 gezeigten Ausführungsform. In diesem Beispiel kann ein Koordiatenkreuz oder Nullpunkt 82 basierend auf einer Unterkante des Codes und einer horizontalen Mitte definiert bestimmt werden. Ferner ist der Einfüllstutzen bzw. Ansatz 71 zu erkennen, mittels welchem das Brillenglasmaterial eingefüllt wurde. Die Füllrichtung ist mit Pfeil 84 angegeben.

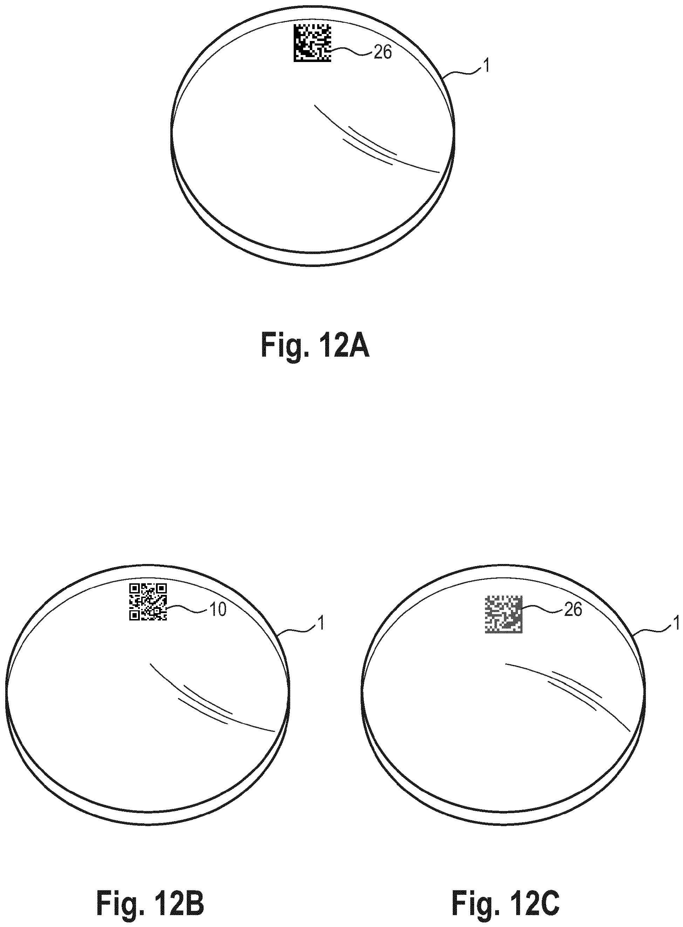

Fig. 12A bis 12C zeigen eine vorteilhafte Anordnung einer Kombination eines ersten Codes auf einem Aufkleber 10 und eines eingeprägten zweiten Codes 26. Auf einer Seite des Brillenglas-Halbfabrikats 1 kann ein konventioneller, in das Brillenglas-Halbfabrikat eingeprägter Code 26 vorgesehen sein. Im vorliegenden Beispiel handelt es sich um einen lasergravierten Code. Beispielsweise kann es sich um einen Code handeln, welcher einer rückseitigen Werkzeugform zugeordnet ist (siehe Fig. 1) und damit auf einer Rückseite eingeprägt ist. Alternativ oder zusätzlich kann weitere Information wie beispielsweise eine Krümmung, eine Produktbezeichnung oder dergleichen vorgesehen sein, welche im nachfolgenden Herstellungsverfahren verwendet werden können.

Auf diesem Code kann, wie in Fig. 12B gezeigt, ein Aufkleber 10 aufgebracht werden. Dieser Aufkleber kann einen Code zur eindeutigen Identifikation des Brillenglas-Halbfabrikats aufweisen. Vorzugsweise ist der Aufkleber 10 derart auf dem Brillenglas-Halbfabrikat angebracht, dass er den zweiten Code 26 zumindest teilweise überlappt oder, wie im vorliegenden Beispiel, vollständig überdeckt. Ein Vorteil dieser Ausgestaltung besteht darin, dass kein zusätzlicher Platz auf dem Linsenelement benötigt wird.

Da das Brillenglas-Halbfabrikat 1 durchsichtig ist, können dennoch sowohl der eingraviert zweite Code 26 als auch der Code auf dem Aufkleber 10 ausgelesen werden. Beispielsweise kann der Code auf dem Aufkleber 10 von Rückseite ausgelesen werden, wohingegen der eingravierte Code 26 - spiegelverkehrt - durch das Brillenglas-Halbfabrikat hindurch von der Vorderseite aus ausgelesen werden kann, wie in Fig. 12C dargestellt.

Das zugehörige Verfahren, wobei das Brillenglas-Halbfabrikat einen in das Brillenglas-Halbfabrikat eingeprägten zweiten Code 26 aufweist, kann folgende Schritte aufweisen: Auslesen des Codes des Aufklebers 10 von einer ersten Seite des Brillenglas-Halbfabrikats 1; und Auslesen des eingeprägten zweiten Codes 26 von einer zweiten Seite des Brillenglas-Halbfabrikats 1. Vorzugsweise kann der zweite Code 26 auf der ersten Seite des Brillenglas-Halbfabrikats eingeprägt sein und der Aufkleber 10 auf der gleichen Seite des Brillenglas-Halbfabrikats aufgebracht werden wie der zweite Code, wobei der Aufkleber den zweiten Code zumindest teilweise überlappt.

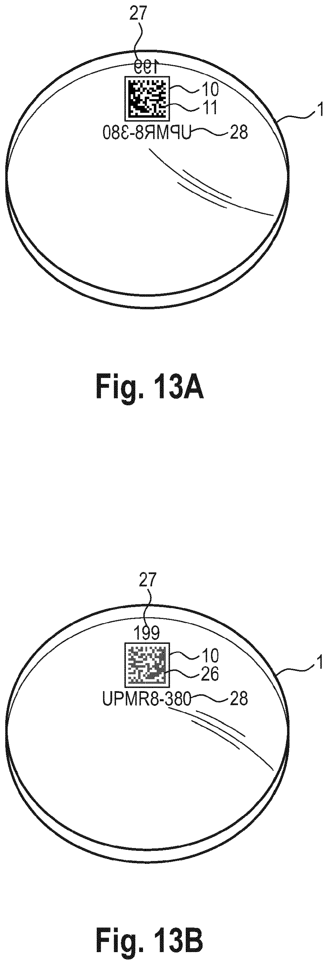

Fig. 13A und 13B zeigen Darstellungen von einem Brillenglas-Halbfabrikat 1 mit einem Aufkleber 10 mit einem Code 11, einem in das Brillenglas-Halbfabrikat eingeprägten zweiten Code 26 und wenigstens einem weiteren optionalen dritten Code, wie beispielsweise alphanumerischen Codes 27 und 28. Fig. 13A zeigt dabei eine Ansicht von der Rückseite (hier: Hohlseite) des Brillenglas-Halbfabrikats. Fig. 13B zeigt eine Ansicht von der Vorderseite. Die alphanumerischen Codes 27, 28 sind folgerichtig spiegelverkehrt wiedergegeben.

Wie bereits in Fig. 12A-12C beschrieben kann der Aufkleber 10 den eingeprägten zweiten Code zumindest teilweise, vorzugsweise vollständig überdecken. Der Aufkleber 10 kann auf der gleichen Fläche oder auf einer anderen Fläche (Vorder- oder Rückseite) wie der eingeprägte zweite Code angebracht sein. Wenn Aufkleber 10 und Code 26 auf unterschiedlichen Flächen vorgesehen sind, kann eine Überdeckung in einer Richtung parallel zur optischen Achse gemäß DIN EN ISO 1366-2013-10 bestimmt werden. In diesem Beispiel ist der Aufkleber 10, wie in Fig. 13A gezeigt, auf der Rückseite angebracht. Von der Rückseite aus ist somit der Code 11 des Aufklebers lesbar. Von der Vorderseite ist, wie in Fig. 13B gezeigt, weiterhin der eingeprägte zweite Code 26 vor der Klebefläche des Aufklebers zu sehen. Mit anderen Worten kommt ein überlagerter Doppelcode zum Einsatz.

Optional weist der Aufkleber einen oder mehrere dritte Codes, vorzugweise alphanumerischen Codes 27, 28 auf. Solche Codes können vorzugsweise von einem Mitarbeiter insbesondere ohne Abfrage einer Datenbank gelesen werden. Der Aufkleber (10) kann derart auf das Brillenglas-Halbfabrikat (1) aufgebracht werden, dass der Aufkleber (10) den in das Brillenglas-Halbfabrikat eingeprägten zweiten Code (25, 26) teilweise oder vollständig überdeckt und den in das Brillenglas-Halbfabrikat eingeprägten dritten Code (27, 28) zumindest teilweise, vorzugsweise vollständig, freilässt. Beispielsweise gibt der Code 27 eine Basiskurve bzw. Basiskrümmung "199" und der Code 28 "UPMR8-380" gibt das Brillenglas-Halbfabrikat als "Universal Puck" vom Typ "MR8" mit einer UV Kennzeichnung "UV 380" an.

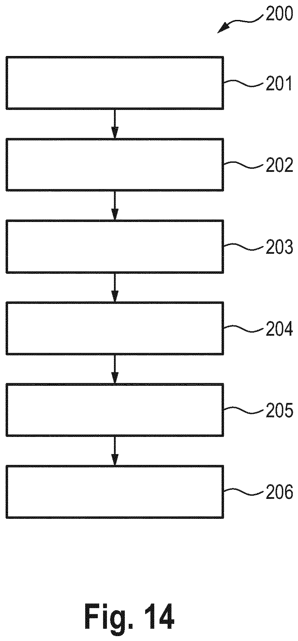

Fig. 14 zeigt ein Flussdiagramm eines beispielhaften Verfahrens gemäß einer Ausführungsform der vorliegenden Offenbarung. In Schritt 201 wird ein Brillenglas-Halbfabrikat 201 hergestellt oder bereitgestellt. In Schritt 202 wird ein Aufkleber auf dem Brillenglas-Halbfabrikat aufgebracht, wobei der Aufkleber einen Code zur eindeutigen Identifikation des Brillenglas-Halbfabrikats aufweist. Optional können die Schritte 201 und 202 an einem anderen Ort erfolgen, wie eine nachfolgende Prozessierung des Brillenglas-Halbfabrikats. Beispielsweis kann in Schritt 203 ein Transport des Brillenglas-Halbfabrikats mit dem aufgebrachten Aufkleber zu einem Bestimmungsort erfolgen.

In Schritt 204 kann der Code des Aufklebers ausgelesen werden. Basierend darauf kann in Schritt 205 eine kundenspezifische Anpassung erfolgen, wie beispielsweise eine Oberflächenbearbeitung, Beschichtung oder Anpassung, insbesondere der Fläche, auf welcher der Aufkleber nicht aufgebracht ist, an eine gewünschte optische Korrekturwirkung des Kunden. Grundsätzlich können alle Parameter und Daten oder zumindest ein Teil davon in einer Datenbank (z.B. der LODB) gespeichert sein und nicht direkt im Code verschlüsselt. Der eindeutige Code kann zu jedem gewünschten Fertigungsschritt als Bindeglied zur Datenbank verwendet werden.

In Schritt 206 kann der Aufkleber optional entfernt werden. Alternativ kann der Aufkleber bis zur Übergabe an den Kunden auf dem Brillenglas-Halbfabrikat bzw. nach der Anpassung an den Rahmen des Kunden sogar noch auf dem fertigen Brillenglas verbleiben, um somit eine lückenlose Dokumentation des gesamten Fertigungsprozesses von der Herstellung des Brillenglas-Halbfabrikats (z.B. in Form eines Linsenrohlings) bis zur Übergabe der fertigen Brille an den Kunden zu ermöglichen.

## Patentansprüche

1. Verfahren zum Herstellen eines Brillenglas-Halbfabrikats (1), mit dem Schritt:
Kennzeichnen des Brillenglas-Halbfabrikats (1) durch Aufbringen eines Aufklebers (10) auf dem Brillenglas-Halbfabrikat (1), wobei der Aufkleber (10) einen Code (11) zur eindeutigen Identifikation des Brillenglas-Halbfabrikats (1) aufweist; wobei der Aufkleber (10) als Referenz für zumindest einen Kontrollbereich oder ein Koordinatensystem des Brillenglas-Halbfabrikats verwendet wird; wobei das Brillenglas-Halbfabrikat (1) einen in das Brillenglas-Halbfabrikat eingeprägten zweiten Code (25, 26) aufweist, und wobei das Verfahren ferner die Schritte aufweist:
- Auslesen des Codes (11) des Aufklebers (10) von einer ersten Seite des Brillenglas-Halbfabrikats (1); und
- Auslesen des eingeprägten zweiten Codes (25, 26) von einer zweiten Seite des Brillenglas-Halbfabrikats (1).

2. Verfahren zum Herstellen eines Brillenglas-Halbfabrikats (1), mit dem Schritt:
Kennzeichnen des Brillenglas-Halbfabrikats (1) durch Aufbringen eines Aufklebers (10) auf dem Brillenglas-Halbfabrikat (1), wobei der Aufkleber (10) einen Code (11) zur eindeutigen Identifikation des Brillenglas-Halbfabrikats (1) aufweist; wobei der Aufkleber (10) als Referenz für zumindest einen Kontrollbereich oder ein Koordinatensystem des Brillenglas-Halbfabrikats verwendet wird; wobei der Aufkleber mit einer Positioniergenauigkeit aus einer Gruppe von ±1 mm, ±500 µm, ±200 µm, ±100 µm, ±50 µm, ±20 µm, ±1° und ±0.5 °Winkelgenauigkeit bezogen auf ein Zentrum des Brillenglas-Halbfabrikats, auf dem Brillenglas-Halbfabrikat aufgebracht ist.

3. Verfahren nach einem der vorhergehenden Ansprüche, **gekennzeichnet durch** die Schritte:
- Oberflächenbearbeitung einer Vorder- und/oder Rückfläche des Brillenglas-Halbfabrikats (1);
wobei der Schritt des Aufbringens des Aufklebers auf dem Brillenglas-Halbfabrikat vor dem Schritt der Oberflächenbearbeitung der Vorder- und/oder Rückfläche des Brillenglas-Halbfabrikats erfolgt.

4. Verfahren nach einem der vorhergehenden Ansprüche, **gekennzeichnet durch** die Schritte:
- Bereitstellen des Brillenglas-Halbfabrikats (1);
- Auslesen eines Codes von zumindest einer Werkzeugform mit welcher zumindest eine Oberfläche des Brillenglas-Halbfabrikats geformt wurde;
- Aufbringen des Aufklebers (10) mit dem Code (11) zur eindeutigen Identifikation des Brillenglas-Halbfabrikats auf das Brillenglas-Halbfabrikat;
- Zuordnen des Codes der Werkzeugform und des Codes des Aufklebers.

5. Verfahren nach einem der vorhergehenden Ansprüche, **gekennzeichnet durch** die Schritte:
- Nachverfolgen des individuellen Brillenglas-Halbfabrikats (1) in der Fertigung über einen mehrstufigen Fertigungsprozess anhand des auf dem Brillenglas-Halbfabrikat aufgebrachten Aufklebers (10) mit dem Code (11) zur eindeutigen Identifikation des Brillenglas-Halbfabrikats (1).

6. Verfahren nach einem der vorhergehenden Ansprüche, **gekennzeichnet durch** die Schritte: Auslesen des Codes (11) zur eindeutigen Identifikation des Brillenglas-Halbfabrikats (1); Abfragen von wenigstens einem Korrekturparameter für einen folgenden Verarbeitungsschritt basierend auf dem Code (11); und Anwenden des Korrekturparameters in dem folgenden Verarbeitungsschritt.

7. Verfahren nacheinem der vorhergehenden Ansprüche, **dadurch gekennzeichnet, dass** das Brillenglas-Halbfabrikat ferner einen in das Brillenglas-Halbfabrikat eingeprägten dritten Code (27, 28) aufweist, und wobei der Aufkleber (10) derart auf das Brillenglas-Halbfabrikat (1) aufgebracht wird, dass der Aufkleber (10) den in das Brillenglas-Halbfabrikat eingeprägten dritten Code (27, 28) zumindest teilweise freilässt.

8. Verfahren nach einem der vorhergehenden Ansprüche, sofern abhängig von Anspruch 2, **dadurch gekennzeichnet, dass** das Brillenglas-Halbfabrikat (1) einen in das Brillenglas-Halbfabrikat eingeprägten zweiten Code (25, 26) aufweist, und wobei das Verfahren ferner die Schritte aufweist:
- Auslesen des Codes (11) des Aufklebers (10) von einer ersten Seite des Brillenglas-Halbfabrikats (1); und
- Auslesen des eingeprägten zweiten Codes (25, 26) von einer zweiten Seite des Brillenglas-Halbfabrikats (1).

9. Verfahren nach einem der vorhergehenden Ansprüche, sofern abhängig von Anspruch 1, **dadurch gekennzeichnet, dass** der Aufkleber mit einer Positioniergenauigkeit aus einer Gruppe von ±1 mm, ±500 µm, ±200 µm, ±100 µm, ±50 µm, ±20 µm, ±1° und ±0.5 °Winkelgenauigkeit bezogen auf ein Zentrum des Brillenglas-Halbfabrikats, auf dem Brillenglas-Halbfabrikat aufgebracht ist.

## Claims

1. Method for producing a semi-finished spectacle lens (1), comprising the following step:
identifying the semi-finished spectacle lens (1) by applying a sticker (10) on the semi-finished spectacle lens (1), wherein the sticker (10) has a code (11) for unique identification of the semi-finished spectacle lens (1); wherein the sticker (10) is used as a reference for at least one control region or a coordinate system of the semi-finished spectacle lens; wherein the semi-finished spectacle lens (1) has a second code (25, 26) embossed into the semi-finished spectacle lens, and wherein the method furthermore comprises the following steps:
- reading out the code (11) of the sticker (10) from a first side of the semi-finished spectacle lens (1); and
- reading out the embossed second code (25, 26) from a second side of the semi-finished spectacle lens (1).

2. Method for producing the semi-finished spectacle lens (1), comprising the following step:
identifying the semi-finished spectacle lens (1) by applying a sticker (10) on the semi-finished spectacle lens (1), wherein the sticker (10) has a code (11) for unique identification of the semi-finished spectacle lens (1); wherein the sticker (10) is used as a reference for at least one control region or a coordinate system of the semi-finished spectacle lens; wherein the sticker is applied on the semi-finished spectacle lens with a positioning accuracy from a group of ±1 mm, ±500 µm, ±200 µm, ±100 µm, ±50 µm, ±20 µm, ±1° and ±0.5° angular accuracy relative to a centre of the semi-finished spectacle lens.

3. Method according to either of the preceding claims, **characterized by** the following steps:
- surface processing of a front and/or back surface of the semi-finished spectacle lens (1);
wherein the step of applying the sticker on the semi-finished spectacle lens is carried out before the step of surface processing of the front and/or back surface of the semi-finished spectacle lens.

4. Method according to any one of the preceding claims, **characterized by** the following steps:
- providing the semi-finished spectacle lens (1);
- reading out a code from at least one tool mould that was used to mould at least one surface of the semi-finished spectacle lens;
- applying the sticker (10) with the code (11) for unique identification of the semi-finished spectacle lens to the semi-finished spectacle lens;
- assigning the code of the tool mould and the code of the sticker.

5. Method according to any one of the preceding claims, **characterized by** the following steps:
- tracking the individual semi-finished spectacle lens (1) in manufacturing by way of a multi-stage manufacturing process on the basis of the sticker (10) applied on the semi-finished spectacle lens with the code (11) for unique identification of the semi-finished spectacle lens (1).

6. Method according to any one of the preceding claims, **characterized by** the following steps:
reading out the code (11) for unique identification of the semi-finished spectacle lens (1);
interrogating at least one correction parameter for a subsequent processing step on the basis of the code (11); and applying the correction parameter in the subsequent processing step.

7. Method according to any one of the preceding claims, **characterized in that** the semi-finished spectacle lens furthermore has a third code (27, 28) embossed into the semi-finished spectacle lens, and wherein the sticker (10) is applied to the semi-finished spectacle lens (1) in such a way that the sticker (10) at least partly leaves free the third code (27, 28) embossed into the semi-finished spectacle lens.

8. Method according to any one of the preceding claims, if dependent on Claim 2, **characterized in that** the semi-finished spectacle lens (1) has a second code (25, 26) embossed into the semi-finished spectacle lens, and wherein the method furthermore comprises the following steps:
- reading out the code (11) of the sticker (10) from a first side of the semi-finished spectacle lens (1); and
- reading out the embossed second code (25, 26) from a second side of the semi-finished spectacle lens (1).

9. Method according to any one of the preceding claims, if dependent on Claim 1, **characterized in that** the sticker is applied on the semi-finished spectacle lens with a positioning accuracy from a group of ±1 mm, ±500 µm, ±200 µm, ±100 µm, ±50 µm, ±20 µm, ±1° and ±0.5° angular accuracy relative to a centre of the semi-finished spectacle lens.

## Revendications

1. Procédé de fabrication d'un verre de lunettes semi-fini (1), le procédé comprenant l'étape suivante :
identifier le verre de lunettes semi-fini (1) par application d'un autocollant (10) sur le verre de lunettes semi-fini (1), l'autocollant (10) comportant un code (11) permettant d'identifier de manière univoque le verre de lunettes semi-fini (1) ; l'autocollant (10) étant utilisé comme référence pour au moins une zone de contrôle ou un système de coordonnées du verre de lunettes semi-fini ; le verres de lunettes semi-fini (1) comportant un deuxième code (25, 26) estampé dans le verres de lunettes semi-fini, et le procédé comprenant en outre les étapes suivantes :
- lire le code (11) de l'autocollant (10) depuis un premier côté du verre de lunettes semi-fini (1) ; et
- lire le deuxième code estampé (25, 26) depuis un deuxième côté du verre de lunettes semi-fini (1).

2. Procédé de fabrication d'un verre de lunettes semi-fini (1), le procédé comprenant l'étape suivante :
caractériser le verre de lunettes semi-fini (1) par application d'un autocollant (10) sur le verre de lunettes semi-fini (1), l'autocollant (10) comportant un code (11) permettant d'identifier de manière univoque le verre de lunettes semi-fini (1) ;
l'autocollant (10) étant utilisé comme référence pour au moins une zone de contrôle ou un système de coordonnées du verre de lunettes semi-fini ;
l'autocollant étant appliqué sur le verre de lunettes semi-fini avec une précision de positionnement choisie dans un groupe comprenant ± 1 mm, ± 500 µm, ± 200 µm, ± 100 µm, ± 50 µm, ± 20 µm, et une précision angulaire parmi ± 1° et ± 0,5°, par rapport à un centre du verre de lunettes semi-fini.

3. Procédé selon l'une des revendications précédentes, **caractérisé par** les étapes suivantes :
- effectuer un traitement de surface sur une surface avant et/ou arrière du verre de lunettes semi-fini (1) ;
l'étape d'application de l'autocollant sur le verre de lunettes semi-fini étant effectuée avant l'étape de traitement de surface de la surface avant et/ou arrière du verre de lunettes semi-fini.

4. Procédé selon l'une des revendications précédentes, **caractérisé par** les étapes suivantes :
- fournir le verre de lunettes semi-fini (1) ;
- lire un code depuis au moins une forme d'outil avec lequel au moins une surface du verre de lunettes semi-fini a été formée ;
- appliquer l'autocollant (10), pourvu du code (11) permettant une identification univoque du verre de lunettes semi-fini, sur le verre de lunettes semi-fini ;
- associer le code de la forme d'outil et le code de l'autocollant.

5. Procédé selon l'une des revendications précédentes, **caractérisé par** les étapes suivantes :
- effectuer un suivi du verre de lunettes semi-fini (1) lors de la fabrication par le biais d'un processus de fabrication en plusieurs étapes à l'aide de l'autocollant (10) appliqué sur le verre de lunettes semi-fini et pourvu du code (11) permettant une identification univoque du verre de lunettes semi-fini (1) .

6. Procédé selon l'une des revendications précédentes, **caractérisé par** les étapes suivantes :
lire le code (11) permettant l'identification univoque du verre de lunettes semi-fini (1) ; interroger au moins un paramètre de correction en vue d'une étape de traitement ultérieure sur la base du code (11) ; et
appliquer le paramètre de correction dans l'étape de traitement suivante.

7. Procédé selon l'une des revendications précédentes, **caractérisé en ce que** le verre de lunettes semi-fini comporte en outre un troisième code (27, 28) estampé dans le verre de lunettes semi-fini, et l'autocollant (10) étant appliqué sur le verre de lunettes semi-fini (1) de telle sorte que l'autocollant (10) laisse le troisième code (27, 28), estampé dans le verre de lunettes semi-fini, au moins partiellement libre.

8. Procédé selon l'une des revendications précédentes, si elle est dépendante de la revendication 2, **caractérisé en ce que** le verre de lunettes semi-fini (1) comporte un deuxième code (25, 26) estampé dans le verre de lunettes semi-fini, et le procédé comprenant en outre les étapes suivantes :
- lire le code (11) de l'autocollant (10) depuis un premier côté du verre de lunettes semi-fini (1) ; et
- lire le deuxième code estampé (25, 26) depuis un deuxième côté du verre de lunettes semi-fini (1).

9. Procédé selon l'une des revendications précédentes, si elle est dépendante de la revendication 1, **caractérisé en ce que** l'autocollant est appliqué sur le verre de lunettes semi-fini avec une précision de positionnement choisie dans un groupe comprenant ± 1 mm, ± 500 µm, ± 200 µm, ± 100 µm, ± 50 µm, ± 20 µm, et une précision angulaire parmi ± 1° et ± 0,5°, par rapport à un centre du verre de lunettes semi-fini.
